# EUROPEAN PATENT APPLICATION

(11) **EP 4 414 426 A1**
(43) Date of publication of application: **14.08.2024**
(21) Application number: 22890048.6
(22) Date of filing: 07.11.2022
(51) Int. Cl.: C08L 101/08, C08K 5/3445, C08K 5/56

(54) **CURABLE RESIN COMPOSITION**

(30) Priority: 08.11.2021 JP 2021181702
(71) Applicant: Kyoeisha Chemical Co., Ltd., Osaka-shi, Osaka 541-0054 (JP)
(72) Inventor: MORIWAKI, Yuya, Nara-shi, Nara 630-8453 (JP); MATSUDA, Tomoya, Nara-shi, Nara 630-8453 (JP); ASADA, Kosuke, Nara-shi, Nara 630-8453 (JP); DONKAI, Masaru, Nara-shi, Nara 630-8453 (JP); NAKAGAWA, Hiroki, Nara-shi, Nara 630-8453 (JP); YOSHIDA, Narutoshi, Nara-shi, Nara 630-8453 (JP); TAKENAKA, Naomi, Nara-shi, Nara 630-8453 (JP)
(74) Representative: Isarpatent
(86) International application number: PCT/JP2022/041303
(87) International publication number: WO 2023/080228

(57) **Abstract**

Provided is a curable resin composition having high reactivity and curable at low temperatures.

The curable resin composition includes: a resin component (A) having -COOR (R is an alkyl group having 50 or less carbon atoms) and a hydroxyl group; and a transesterification catalyst (B), characterized in that the transesterification catalyst (B) contains a zinc-containing compound and an imidazole compound.

## Description

### Technical Field

The present invention relates to a curable resin composition.

### Background Art

The present inventors have studied thermosetting resin compositions whose curing reaction is a transesterification reaction (PTLs 1 to 3). Through such studies, it is becoming clear that a thermosetting resin composition having equal or better performance compared to curing utilizing a melamine resin or an isocyanate compound, which is a well-known curing agent, can be provided.

As such a thermosetting resin composition whose curing reaction is a transesterification reaction, further, a composition having high reactivity is required. That is, the composition may be required to respond to cases where a component that inhibits the curing reaction exists in the system, curing at low temperatures is needed, or curing within a short time is needed.

Thus, the present inventors have proposed a thermosetting resin composition, which can be cured at relatively low temperatures, and a catalyst, which can promote a reaction over a wide range (PTL 4).

Further, such curable resin compositions are expected to be deployed in various applications, and there also is a demand to consider their applications to curable resin compositions that are curable at lower temperatures within a shorter time, such as ambient temperature curable resin compositions that can be used for substrates that are difficult to heat during the formation of a coating film, such as large-sized structures, and can form a coating film on such a substrate inexpensively and easily.

### Citation List

### Patent Literature

PTL 1: JP6398026B
PTL 2: WO2019/069783
PTL 3: WO2019/139069
PTL4: WO2021/172307

### Summary of Invention

### Technical Problem

In light of the above, an object of the invention is to provide a curable resin composition having high reactivity and curable at low temperatures.

### Solution to Problems

The invention is a curable resin composition including: a resin component (A) having -COOR (R is an alkyl group having 50 or less carbon atoms) and a hydroxyl group; and a transesterification catalyst (B), in which the transesterification catalyst (B) contains a zinc-containing compound and an imidazole compound.

It is preferable that the zinc compound is at least one zinc compound selected from the group consisting of zinc acetate, zinc octylate, zinc naphthenate, zinc gluconate, zinc acrylate, zinc acetylacetonate, zinc trifluoromethanesulfonate, and zinc oxide.

It is preferable that the imidazole compound is represented by the following general formula. 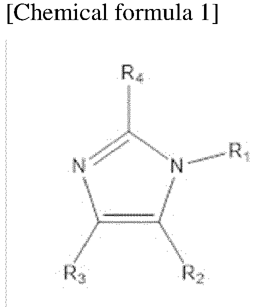 (In the formula, R₁ is an alkyl group, alkenyl group, or aromatic substituent having 10 or less carbon atoms and optionally having a branched structure or a ring structure, and optionally has at least one member selected from the group consisting of a hydroxyl group, an amino group, a carbonyl group, a cyano group, an ester group, an amide group, an ether group, and a nitro group. R₂ to R₄ are each independently a hydrogen atom or an alkyl group, alkenyl group, or aromatic substituent having 10 or less carbon atoms, and each optionally have at least one member selected from the group consisting of a hydroxyl group, an amino group, a carbonyl group, a cyano group, an ester group, an amide group, an ether group, and a nitro group.)

### (Advantageous Effects of Invention)

The curable resin composition of the invention has high reactivity, is curable at low temperatures, and is applicable also to an ambient temperature curable type.

### Brief Description of Drawings

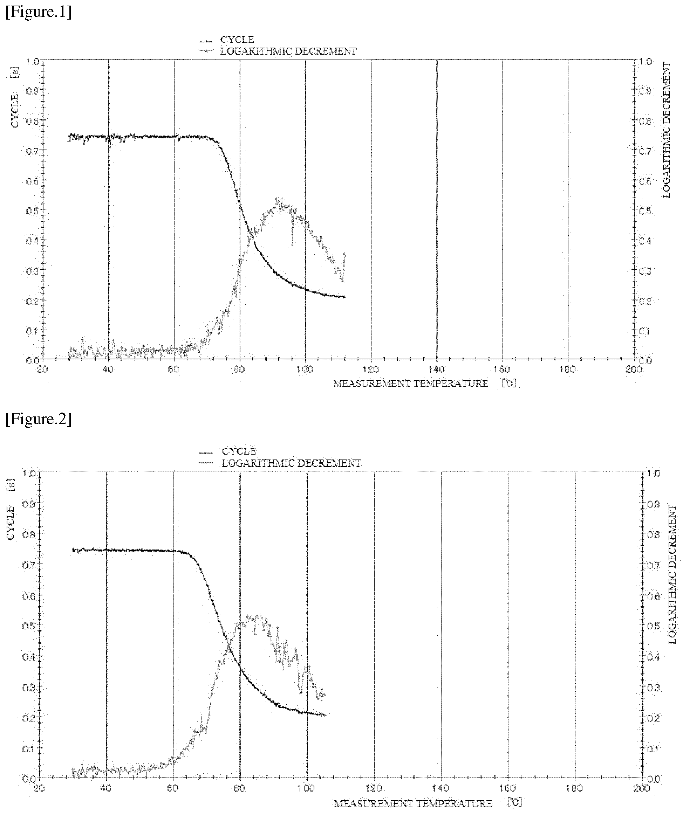

FIG. 1 shows rigid-body pendulum tester data of Example 1;
FIG. 2 shows rigid-body pendulum tester data of Example 3;

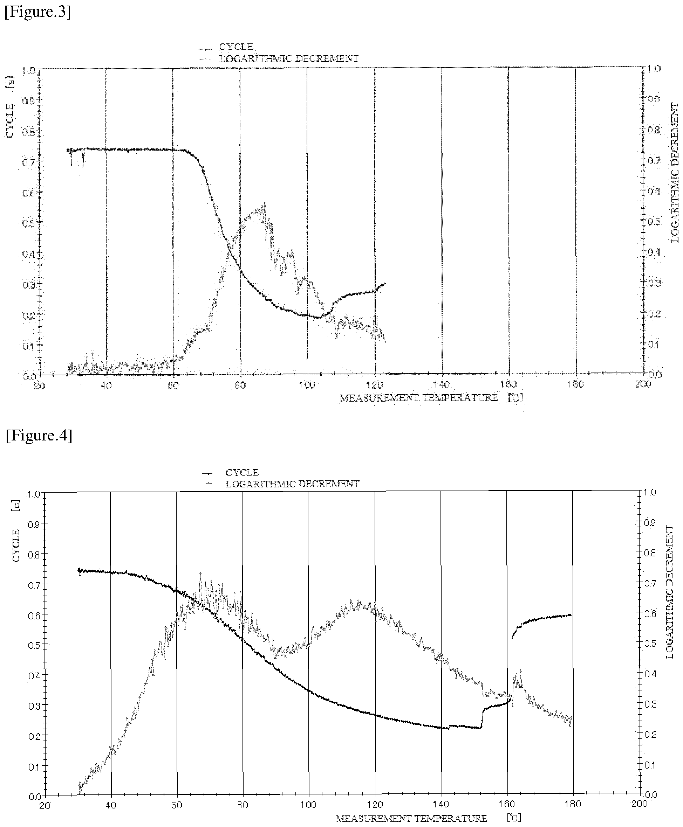

FIG. 3 shows rigid-body pendulum tester data of Example 4;
FIG. 4 shows rigid-body pendulum tester data of Example 5;

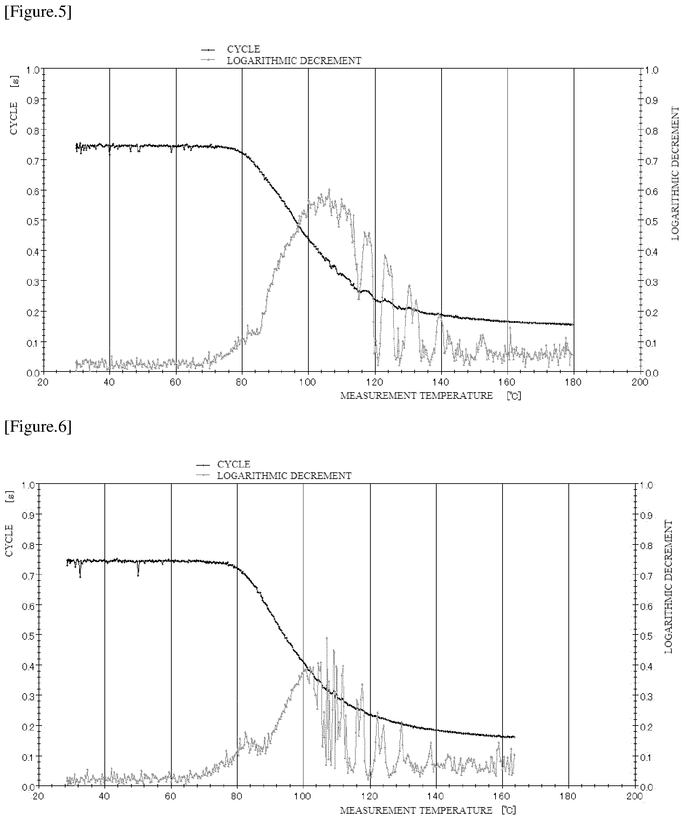

FIG. 5 shows rigid-body pendulum tester data of Example 6;
FIG. 6 shows rigid-body pendulum tester data of Example 7;

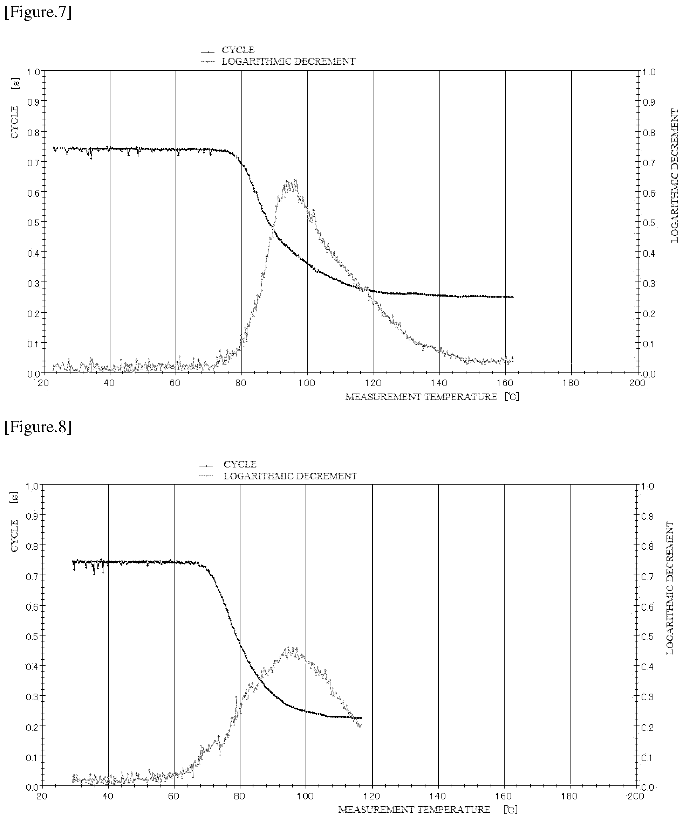

FIG. 7 shows rigid-body pendulum tester data of Example 8;
FIG. 8 shows rigid-body pendulum tester data of Example 9;

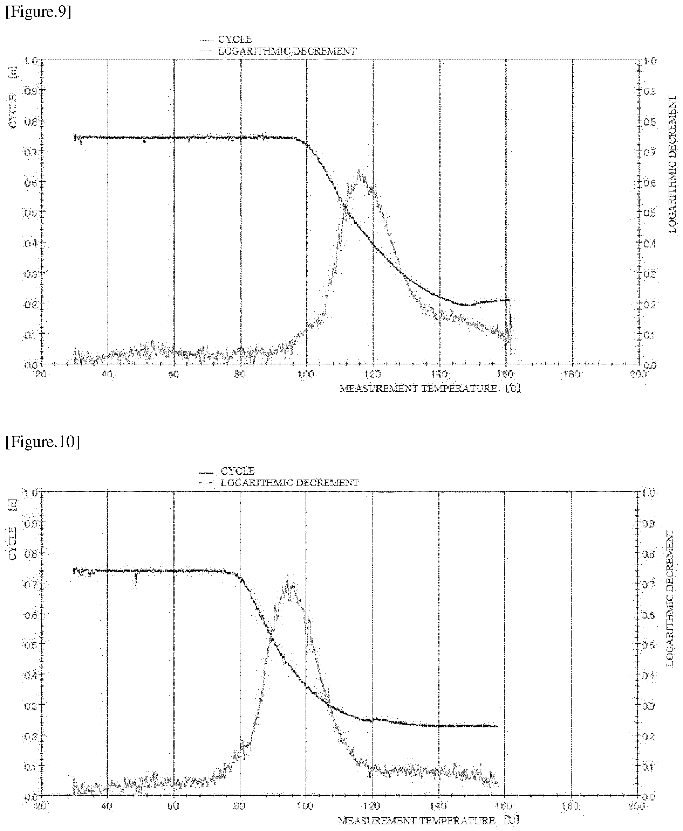

FIG. 9 shows rigid-body pendulum tester data of Comparative Example 1;
FIG. 10 shows rigid-body pendulum tester data of Comparative Example 2;

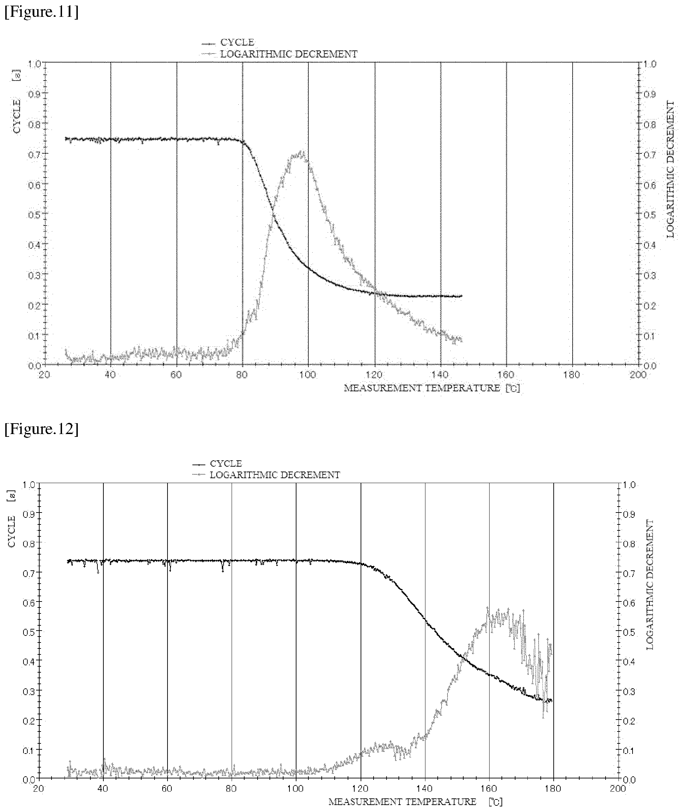

FIG. 11 shows rigid-body pendulum tester data of Comparative Example 3;
FIG. 12 shows rigid-body pendulum tester data of Example 10;

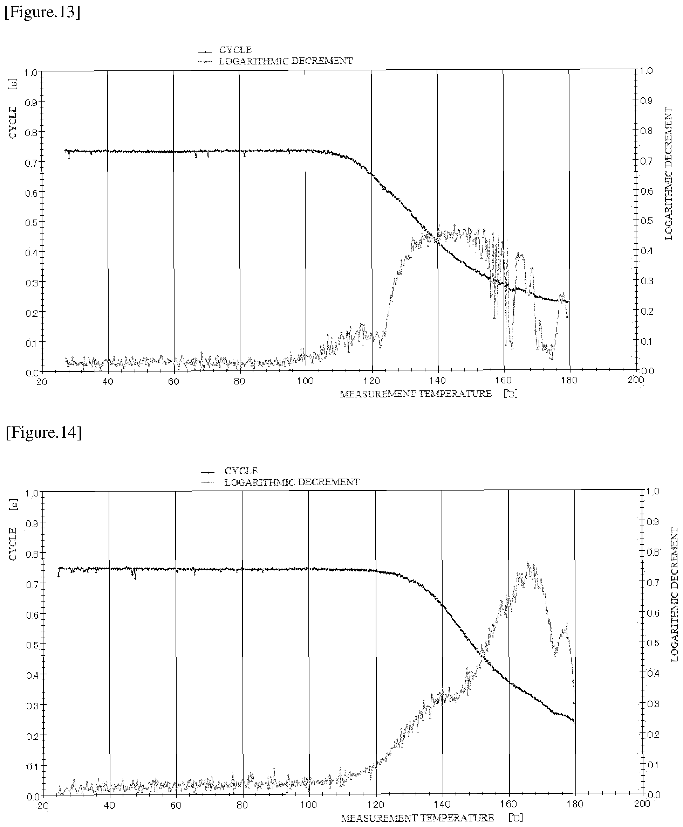

FIG. 13 shows rigid-body pendulum tester data of Example 11;
FIG. 14 shows rigid-body pendulum tester data of Example 12;

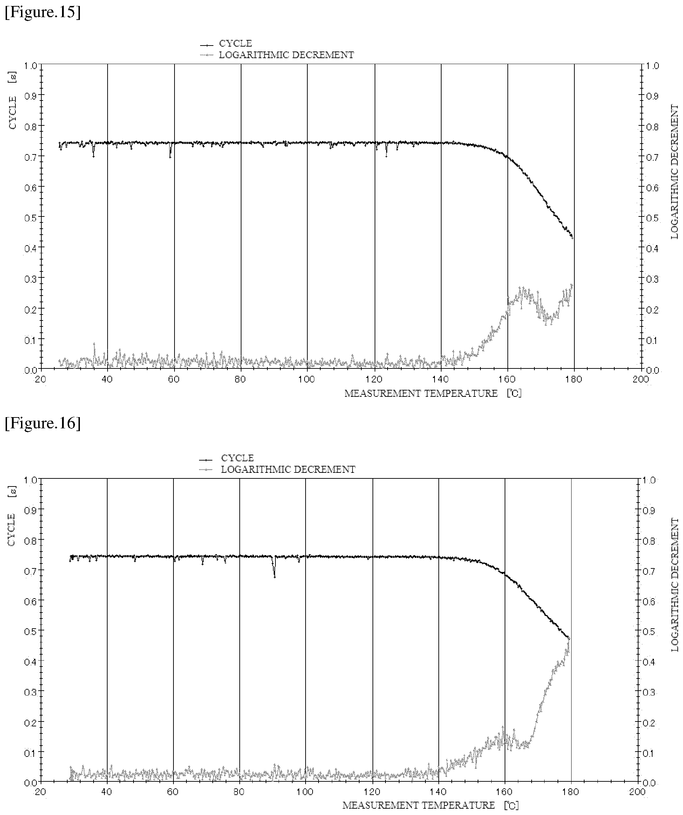

FIG. 15 shows rigid-body pendulum tester data of Comparative Example 4;
FIG. 16 shows rigid-body pendulum tester data of Comparative Example 5; and
FIG. 17 is a diagram showing how to read the cure onset temperature in a rigid-body pendulum test herein.

### Description of Embodiments

Hereinafter, the invention will be described in detail.

According to the invention, in a thermosetting resin composition whose curing reaction is a transesterification reaction, a specific transesterification catalyst is used. As a result, the cure onset temperature can be reduced, allowing applications also to an ambient temperature curable type. In addition, even after curing, the thermosetting resin composition can offer sufficient physical properties such as strength.

In the invention, it is important to use, as the transesterification catalyst (B), one containing a zinc-containing compound and an imidazole compound. As a result of using a catalyst that combines them, the reactivity can be higher than before, and a transesterification reaction at lower temperatures can be achieved.

Although the action by which such an effect is produced is not clear, it is presumed that the coordination of the imidazole compound with zinc leads to improved catalytic activity.

The cure onset temperature of the cured resin product of the invention is preferably 80°C or less, and more preferably 70°C or less.

When the above value is 70°C or less, such a curable resin composition not only has high reactivity and can be cured at low temperatures, but also can offer favorable curing reactivity even in the case of being used for applications that need short-time curing or used as an ambient temperature curable resin composition.

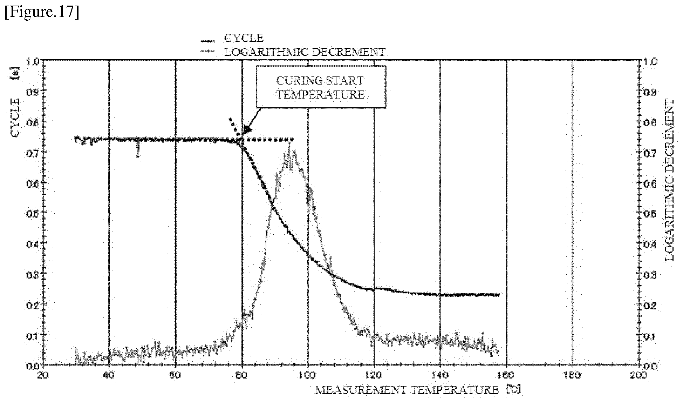

The cure onset temperature refers to the temperature at which the period begins to decrease in a rigid-body pendulum test under a temperature rise condition of 3°C/min, and is a value determined by measuring the cure onset point as shown in FIG. 17.

In order to obtain a curable resin composition that satisfies the performance described above, the selection of the transesterification catalyst (B) to be used is important. That is, as a catalyst that is particularly highly effective in promoting reactivity, the above catalyst containing a zinc-containing compound and an imidazole compound is selected, and, as a result, a curable resin composition having the performance described above can be obtained.

In addition, it is also possible to obtain a curable resin composition that can realize curing at lower temperatures by, in addition to selecting the transesterification catalyst (B), further selecting, also in the resin component (A), a resin composition that is prone to curing reaction and suitably combing them.

Hereinafter, the selection of the transesterification catalyst (B) and the selection of the resin composition, which are important in obtaining the curable resin composition of the invention, will each be described in detail.

### (Transesterification catalyst (B))

In the curable resin composition of the invention, as described above, it is important to combine a zinc-containing compound and an imidazole compound as the transesterification catalyst (B).

Examples of the zinc-containing compound include zinc acetate, zinc octylate, zinc naphthenate, zinc gluconate, zinc acrylate, zinc acetylacetonate, zinc trifluoromethanesulfonate, and zinc oxide. Further, a zinc cluster catalyst (e.g., ZnTAC24 (trade name) manufactured by Tokyo Chemical Industry Co., Ltd.) and the like can also be used.

Further, two or more kinds of the compounds described above may also be used together.

As the zinc-containing compound, a salt compound is particularly preferable, and it is preferable to use zinc acetylacetonate as the anion component because, as a result, better transesterification ability tends to be obtained compared to a metal compound of the same kind.

In addition, in the case where zinc oxide is used, it is favorably dispersed in acetylacetone and used. As a result of dispersing zinc oxide in acetylacetone, presumably, zinc acetylacetonate is produced.

The zinc oxide and acetylacetone are preferably contained in a ratio of 1:0.5 to 1:10 (weight ratio). As a result of blending in such a ratio, particularly favorable results can be obtained.

The lower limit is more preferably 1:0.8, and still more preferably 1:1. The upper limit is more preferably 1:5, and still more preferably 1:3.

As the imidazole compound to be used together with the zinc-containing compound, a compound represented by the following general formula is favorable.

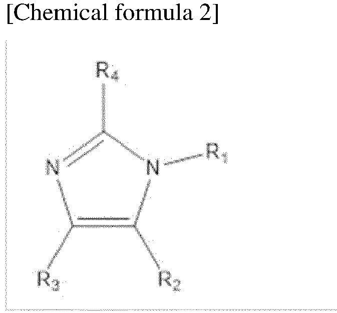

(In the formula, R₁ is an alkyl group, alkenyl group, or aromatic substituent having 10 or less carbon atoms and optionally having a branched structure or a ring structure, and optionally has at least one member selected from the group consisting of a hydroxyl group, an amino group, a carbonyl group, a cyano group, an ester group, an amide group, an ether group, and a nitro group. R₂ to R₄ are each independently a hydrogen atom or an alkyl group, alkenyl group, or aromatic substituent having 10 or less carbon atoms, and each optionally have at least one member selected from the group consisting of a hydroxyl group, an amino group, a carbonyl group, a cyano group, an ester group, an amide group, an ether group, and a nitro group.)

As compounds represented by the above general formula, specifically, 1-methylimidazole, 1-ethylimidazole, 1-propylimidazole, 1-butylimidazole, 1-vinylimidazole, 1-allylimidazole, 1-acetylimidazole, 1-phenylimidazole, 1-benzylimidazole, 1-(2-cyanoethyl)-2-methylimidazole, 1-(2-cyanoethyl)-2-phenylimidazole, 1,2-dimethylimidazole, 1-benzyl-2-methylimidazole, metronidazole, 1-methylbenzimidazole, and the like can be mentioned.

Among them, 1-methylimidazole is preferable in terms of production cost.

In addition, as compounds represented by the above general formula, compounds obtained through an addition reaction between an imidazole such as imidazole, 2-methylimidazole, 2-ethyl-4-methyl-imidazole, or benzimidazole and a (meth)acrylic acid ester can be mentioned.

As (meth)acrylic acid esters used for the above addition reaction, methyl (meth)acrylate, ethyl (meth)acrylate, 2-hydroxyethyl (meth)acrylate, 4-hydroxybutyl (meth)acrylate, 2-(dimethylamino)ethyl (meth)acrylate, cyclohexyl (meth)acrylate, t-butyl (meth)acrylate, isobornyl (meth)acrylate, 2-methoxyethyl (meth)acrylate, tetrahydrofurfuryl (meth)acrylate, (poly)ethylene glycol di(meth)acrylate, tricyclodecane dimethanol di(meth)acrylate, trimethylolpropane tri(meth)acrylate, and the like can be mentioned. Among them, methyl acrylate is preferable in terms of reactivity.

In addition, among the above imidazoles, imidazole and 2-methylimidazole are preferable in terms of reactivity.

The above compounds may be produced by known production methods, and an imidazole and a (meth)acrylic acid ester as described above may be used independently from or as a mixture with each other. For example, an imidazole and a (meth)acrylic acid ester as described above may be mixed and heated to 30 to 90°C. In addition, it is also possible that an imidazole is heated to 30 to 90°C optionally using a solvent, and a (meth)acrylic acid ester is gradually added dropwise at such a temperature.

In this reaction, the quantitative ratio between the reactive amine hydrogen atoms and the double bond product should just be the equivalence ratio.

In addition, the molecular weight of the imidazole compound used in the invention is, for example, preferably 500 or less, and more preferably 300 or less. When the imidazole compound has a molecular weight within the above range, high catalytic activity can be obtained.

In addition, the molecular weight of the imidazole compound is preferably 80 or more.

Incidentally, an imidazole compound is a monomer, and the molecular weight is calculated by analyzing its composition.

According to the invention, the catalytic action in a transesterification reaction improves, making it possible to perform a transesterification reaction at lower temperatures. Accordingly, energy efficiency can be improved. Further, it can also be used in the case of performing a transesterification reaction of a compound having low heat resistance.

In addition, the transesterification catalyst (B) is preferable in that the reaction can be allowed to proceed even in a system where a carboxyl group is present, for example. Accordingly, it can also be favorably used as a catalyst for a transesterification reaction in a water-based curable resin composition.

In addition, the transesterification catalyst (B) is preferable also in that a curable resin composition having added thereto a basic compound can be obtained. For example, in the case where an amine compound is used as an additive such as a pigment dispersant, or further in the case where the coating material is made aqueous, it has widely been practiced to introduce an acid group, such as a carboxylic acid group or a sulfonic acid group, into the resin and neutralize the same with an amine compound or the like to make it water soluble. In this case, it has been difficult to use an acidic catalyst together, posing a problem that prevents a curable resin composition whose curing reaction is a transesterification reaction from being made aqueous. The transesterification catalyst (B) can cause a good curing reaction even without using an acid catalyst, and thus is preferable also in that a curable resin composition having added thereto a basic compound can be obtained.

In addition, even in the case where the curable resin composition of the invention is used as a solvent-based coating composition, in some cases, as part of the layers of a multilayer coating film, an aqueous coating material is used in combination. In this case, in the case where the multilayer coating film is heat-cured at once, amine, ammonia, and the like may be generated from the rest of the layers forming the multilayer coating film. The above catalyst is preferable in that good curing can be performed even in such a case.

It is preferable that the transesterification catalyst contains a zinc-containing compound (B-1) and an imidazole compound (B-2) in a ratio (B-1):(B-2) of 100:1 to 1:100 (weight ratio). As a result of blending in such a ratio, particularly favorable results can be obtained. The lower limit is more preferably 50:1, and still more preferably 10:1. The upper limit is more preferably 1:50, and still more preferably 1:10.

The zinc-containing compound (B-1) is preferably contained in a proportion of 0.01 to 50 wt% relative to the amount of compounds involved in a reaction in the reaction system at the time of causing the reaction.

The imidazole compound (B-2) is preferably contained in a proportion of 0.01 to 50 wt% with respect to the amount of compounds involved in a reaction in the reaction system at the time of causing the reaction.

In addition, in the invention, together with the above transesterification catalyst, basic compounds such as diazabicycloundecene (DBU), diazabicyclononene (DBN), diazabicyclooctane (DABCO), tetrabutylammonium hydroxide, tetraethylammonium hydroxide, and tetramethylammonium hydroxide may also be used.

### (Resin composition)

Hereinafter, resin compositions that can be used for the curable resin composition of the invention will be described in detail. Incidentally, the composition of the curable resin composition is not limited to those exemplified below. Further, the curable resin composition in the invention also encompasses those that become resins when cured. That is, a composition that itself contains only a low molecular weight compound but is converted into a resin through a reaction is encompassed.

The resin component (A) used in the invention has -COOR (R is an alkyl group having 50 or less carbon atoms) and a hydroxyl group.

That is, in the invention, any known compound or novel compound with these functional groups can be used.

As such resin components, an acrylic resin, a polyester resin, a polyether resin, a urethane resin, a silicone resin, and the like containing necessary functional groups can be mentioned. In addition, a mixture of these resins and the like may also be used. Further, at least part of the components may be a low molecular weight compound.

The resin component may be a mixture of a compound (A-1) having two or more -COOR (R is an alkyl group having 50 or less carbon atoms) groups and a compound (A-2) having a hydroxyl group, or the resin component may also be composed partially or entirely of a compound (A-3) having one or more -COOR (R is an alkyl group having 50 or less carbon atoms) groups and one or more hydroxyl groups. Further, it may also be a resin composition indispensably containing (A-3) and additionally containing (A-1) and/or (A-2).

R in the resin of the invention may be primary, secondary, or tertiary as long as it has 50 or less carbon atoms, but is more preferably primary or secondary, and most preferably primary.

More specifically, those having a known ester group, such as a methyl ester group, an ethyl ester group, a benzyl ester group, an n-propyl ester group, an isopropyl ester group, an n-butyl ester group, an isobutyl ester group, a sec-butyl ester group, and a t-butyl group, can be used. The R is preferably produced as an alcohol and volatilized during a transesterification reaction, and, therefore, the number of carbon atoms in the alkyl group is preferably 20 or less, and still more preferably 10 or less. In addition, the boiling point of the alcohol volatilized during a curing reaction is preferably 300°C or less, and more preferably 200°C or less.

Hereinafter, resins and low molecular weight compounds that can be used in the invention will be exemplified. The invention is not limited to the use of the following resins and low molecular weight compounds, and compounds exemplified below and compounds having the above functional groups can be suitably combined as necessary and used.

### (1) Polymer obtained by polymerization of unsaturated bonds

Polymers obtained by the polymerization of unsaturated bonds, such as an acrylic resin, are resins commonly used in the fields of coating materials, adhesives, and like thermosetting resins. When a monomer having a hydroxyl group or an alkyl ester group is used, such a functional group will be present in the resin at the proportion in the monomer used. Therefore, it is easy to control the amount of functional group in the resin or adjust the resin physical properties, and such a resin can be easily used for the purpose of the invention.

In particular, when introducing a hydroxyl group and an alkyl ester group, they can be introduced using the following monomers (1-1) and (1-2).

### (1-1) Hydroxyl group-containing monomer

Hydroxyl group-containing monomers are not particularly limited, and the following examples can be mentioned.

Various hydroxyl group-containing vinyl ethers such as 2-hydroxyethyl vinyl ether, 3-hydroxypropyl vinyl ether, 2-hydroxypropyl vinyl ether, 4-hydroxybutyl vinyl ether, 3-hydroxybutyl vinyl ether, 2-hydroxy-2-methylpropyl vinyl ether, 5-hydroxypentyl vinyl ether, and 6-hydroxyhexyl vinyl ether; or addition reaction products of these various vinyl ethers listed above and ε-caprolactone;
various hydroxyl group-containing allyl ethers such as 2-hydroxyethyl (meth)allyl ether, 3-hydroxypropyl (meth)allyl ether, 2-hydroxypropyl (meth)allyl ether, 4-hydroxybutyl (meth)allyl ether, 3-hydroxybutyl (meth)allyl ether, 2-hydroxy-2-methylpropyl (meth)allyl ether, 5-hydroxypentyl (meth)allyl ether, and 6-hydroxyhexyl (meth)allyl ether; or addition reaction products of these various allyl ethers listed above and ε-caprolactone;
various hydroxyl group-containing (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, polyethylene glycol mono(meth)acrylate, and polypropylene glycol mono(meth)acrylate; or addition reaction main components of these various (meth)acrylates listed above and ε-caprolactone; and
N-hydroxyalkyl (meth)acrylamides such as N-hydroxymethyl (meth)acrylamide, N-hydroxyethyl (meth)acrylamide, and N-hydroxybutyl (meth)acrylamide, for example.

In addition, it is preferable that a hydroxyl group-containing monomer as a monomer does not have a hydroxyl group directly, but has a hydroxyl group via a linking chain having 5 or more molecules because, in such a case, the hydroxyl group becomes more mobile in the resin, making it easier to cause a reaction.

### (1-2) Alkyl ester group-containing monomer

As the alkyl ester group-containing monomers, monomers having a great variety of alkyl ester groups and polymerizable unsaturated bonds are known. Typically, compounds represented by the following general formulas can be mentioned.

### (1-2-a) Compound represented by the following general formula (1)

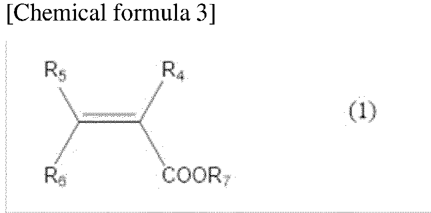

(In the formula, R₄, R₅, and R₆ each represent hydrogen, an alkyl group, a carboxyl group, or an alkyl ester group, and
R₇ represents a hydrocarbon group having 50 or less carbon atoms)

As compounds represented by such general formula (1), ester derivatives of known unsaturated carboxylic acids such as (meth)acrylic acid, crotonic acid, itaconic acid, maleic acid, and fumaric acid can be mentioned.

Monomers having an alkyl ester group and a polymerizable unsaturated bond represented by the above general formula (1) are most typically esters of (meth)acrylic acid and an alcohol. For example, methyl (meth)acrylate, ethyl (meth)acrylate, n-propyl (meth)acrylate, benzyl (meth)acrylate, isopropyl (meth)acrylate, n-butyl (meth)acrylate, isobutyl (meth)acrylate, sec-butyl (meth)acrylate, t-butyl (meth)acrylate, lauryl (meth)acrylate, and the like can be mentioned.

The above t-butyl (meth)acrylate is an ester of a tertiary alkyl and thus has a high transesterification reaction rate, and, therefore, the curing reaction proceeds efficiently. Therefore, it has better crosslinking reactivity than primary alkyl esters and secondary alkyl esters, and is an extremely preferred raw material for providing an ester group that achieves the object of the invention.

### (1-2-b) Compound represented by the following general formula (4)

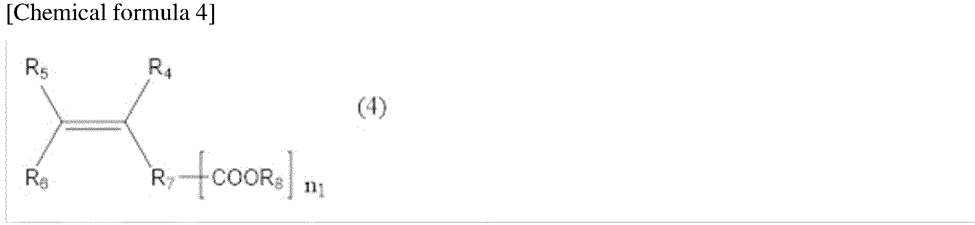

n₁: 1 to 10
(In the formula, R₄, R₅, and R₆ are the same or different and are each hydrogen, an alkyl group, a carboxyl group, an alkyl ester group, or a structure represented by the following R₇-[COOR₈]n₁.
R₇ is an aliphatic, alicyclic, or aromatic alkylene group whose main chain has 50 or less atoms and which optionally has one or two or more functional groups selected from the group consisting of an ester group, an ether group, an amide group, and urethane in the main chain and optionally has a side chain.
R₈ is an alkyl group having 50 or less carbon atoms.
In a compound represented by the above general formula (4), the R₇-[COOR₈]n₁ group may be a lactone structure of the following general formula (4-1).) 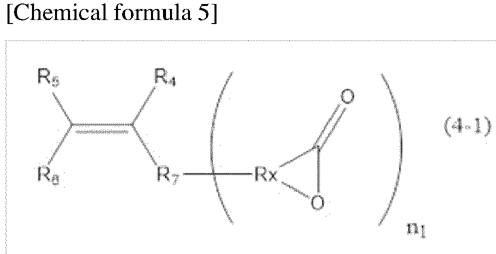
(Rx is a hydrocarbon group having 2 to 10 carbon atoms, which optionally has a branched chain)

A polymer obtained using a monomer represented by the above general formula (4) can be made particularly excellent in transesterification reactivity, and thus is particularly preferable for obtaining a resin composition having a cure onset temperature of 130°C or less and also having, when cured under conditions of baking at 150°C for 30 minutes, a gel fraction of 80% or more.

In a monomer represented by the above general formula (4), R₈ more preferably has a primary or secondary alkyl ester. A primary or secondary alkyl ester group derived from such a monomer is prone to a reaction with a hydroxyl group, and, therefore, the object of the invention can be fully achieved.

A polymer of such a compound can be obtained through a polymerization reaction using an unsaturated bond. In the case where the polymer thus obtained is used in a thermosetting resin composition whose curing reaction is a transesterification reaction, the main chain formed based on the polymerization of unsaturated bonds and an alkyl ester group are present at a distance from each other via a linking group. Therefore, the alkyl ester group can move relatively freely. Therefore, the alkyl ester group and the hydroxyl group can easily approach each other, resulting in improved transesterification reactivity, according to the findings of the prevent investors. As a result of improvement in the reactivity of a transesterification reaction in this way, short-time curing and a lower curing temperature can be realized, and the usefulness of the thermosetting resin composition through a transesterification reaction can be enhanced.

The alkyl ester group is not particularly limited, and those having a known ester group, such as a methyl ester group, an ethyl ester group, a benzyl ester group, an n-propyl ester group, an isopropyl ester group, an n-butyl ester group, an isobutyl ester group, and a sec-butyl ester group, can be used. Incidentally, the alkyl group preferably has 50 or less carbon atoms. The alkyl group is preferably produced as an alcohol and volatilized during a transesterification reaction, and, therefore, the number of carbon atoms in the alkyl group is preferably 20 or less, and still more preferably 10 or less. In addition, the boiling point of the alcohol volatilized during a curing reaction is preferably 300°C or less, and more preferably 200°C or less.

The alkyl group in the above alkyl ester group (i.e., R₈ in the above general formula (4)) is an alkyl group having 50 or less carbon atoms, but the number of carbon atoms is more preferably within a range of 1 to 20, still more preferably within a range of 1 to 10, and yet more preferably within a range of 1 to 6. The number of carbon atoms is most preferably within a range of 1 to 4. They are preferable because within such a range, the curing reaction can be allowed to proceed well.

In addition, the invention also encompasses the case where the alkyl ester group is a lactone group. The ester group of such a lactone group can also cause the transesterification reaction of the invention and can be utilized for a curing reaction. Such a compound has a chemical structure of the above (4-1).

More specifically, as a structure represented by the above general formula (4), for example, one represented by the following formula can be exemplified. 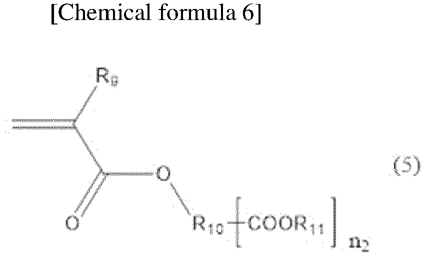
n₂: 1 to 10
(In the formula, R₉ is H or a methyl group.
R₁₀ is an alkylene group whose main chain has 48 or less atoms and which optionally has an ester group, an ether group, and/or an amide group in the main chain and optionally has a side chain.
R₁₁ is an alkyl group having 50 or less carbon atoms.)

Such a compound is a derivative of (meth)acrylic acid, and can be obtained by a known synthesis method that uses (meth)acrylic acid or a derivative thereof as a raw material.

The number of atoms in the main chain of R₁₀ is more preferably 40 or less, still more preferably 30 or less, and yet more preferably 20 or less. Atoms that may be present in the main chain of R₁₀ are not particularly limited, and, in addition to carbon atoms, an oxygen atom, a nitrogen atom, a sulfur atom, a silicon atom, and the like may also be present. Still more specifically, in addition to an alkyl group, R₁₀ may also have an ether group, an ester group, an amino group, an amide group, a thioether group, a sulfonic acid ester group, a thioester group, a siloxane group, and the like in the main chain.

As a structure represented by the above general formula (5), still more specifically, for example, a compound represented by the following general formula (12) or the like can be mentioned. 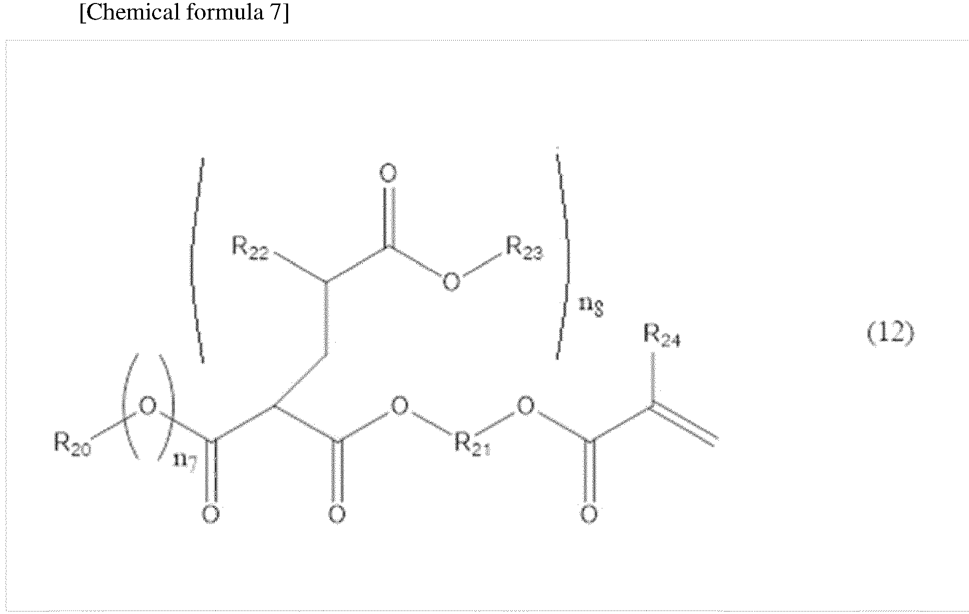 (In the formula, R₂₀ is an alkyl group having 1 to 50 carbon atoms.

R₂₁ is an alkylene group whose main chain has 44 or less atoms and which optionally has an ester group, an ether group, and/or an amide group in the main chain and optionally has a side chain.
R₂₂ is H or a methyl group.
R₂₃ is an alkyl group having 50 or less carbon atoms.
R₂₄ is H or a methyl group.
n₇ is 0 or 1.
n₈ is 1 or 2.)

A compound represented by the above general formula (12) is a compound synthesized through a reaction between a compound that generates an active anion, such as a malonic acid ester or an acetoacetic acid ester having an unsaturated bond in the molecule, and an unsaturated compound having an alkyl ester group.

That is, a malonic acid ester and an acetoacetic acid ester have a methylene group sandwiched between carboxy carbons, and this methylene group is widely known to be prone to anionization and easily cause an anion reaction. By allowing such a compound having an unsaturated bond in the alkyl group of a malonic acid ester or an acetoacetic acid ester (e.g., an ester compound of malonic acid or acetoacetic acid and an unsaturated monomer having a hydroxyl group, which will be described later in detail as "hydroxyl group-containing monomer") to react with an alkyl ester compound having an unsaturated group, a compound having both an unsaturated group and an alkyl ester group can be synthesized.

In a compound having such a structure, it is possible to easily change only the alkyl ester group using a widely used common raw material, and, as a result, the curing reactivity can be easily adjusted. In addition, the curing reactivity can also be adjusted by changing the reaction rate into an active methylene group. Therefore, such a compound is particularly preferable.

Compounds that can be used as "alkyl ester compound having an unsaturated group" used in the above reaction are not particularly limited, and (meth)acrylic acid alkyl esters, methylene malonic acid alkyl esters, lactone compounds having an unsaturated group (e.g., γ-crotonolactone, 5,6-dihydro-2H-pyran-2-one), and the like can be used.

The reaction can be performed under basic conditions and, for example, can be performed by a reaction in an organic solvent in the presence of an alkali metal salt and a crown ether, etc.

An example of such a synthetic reaction is shown below.

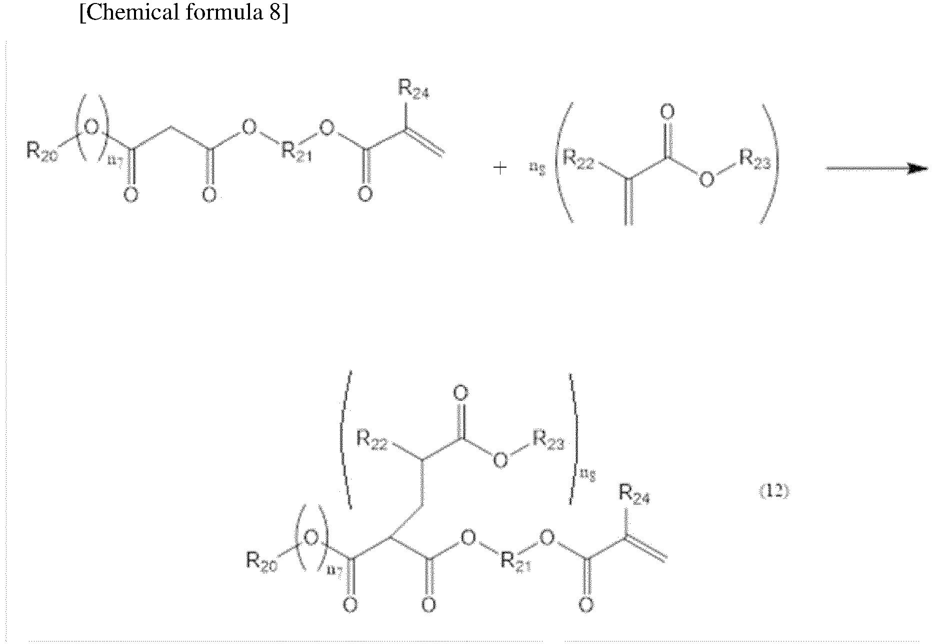

In addition, an alkyl ester compound represented by the above general formula (4) can also be obtained by the esterification of a carboxylic acid corresponding to this compound.

That is, a compound represented by the following general formula (4-2) is a carboxylic acid corresponding to an alkyl ester compound represented by the above general formula (4). 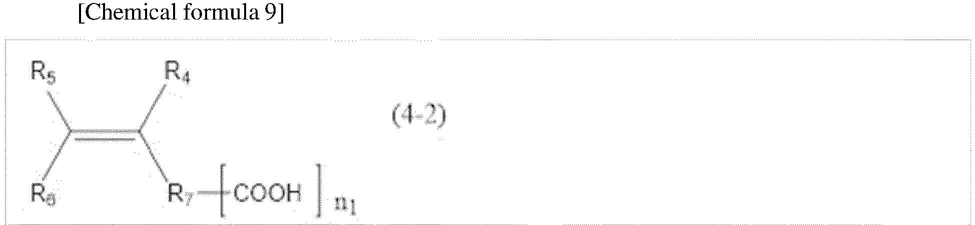
n₁: 1 to 10
(In the formula, R₄, R₅, and R₆ are the same or different and are each hydrogen, an alkyl group, a carboxyl group, an alkyl ester group, or a structure represented by the following R₇-[COOH]n₁.
R₇ is an aliphatic, alicyclic, or aromatic alkylene group whose main chain has 50 or less atoms and which optionally has one or two or more functional groups selected from the group consisting of an ester group, an ether group, an amide group, and urethane in the main chain and optionally has a side chain.)

As compounds represented by the above general formula (4-2), known compounds exist. Such a known compound can also be subjected to a usual esterification reaction (e.g., a reaction with an alcohol corresponding to the alkyl group of the intended alkyl ester) and thus formed into an unsaturated group-containing ester compound used in the invention.

### (1-2-b-X)

A compound represented by the above general formula (4) may be a compound having a functional group represented by the following general formula (31) and an unsaturated group. 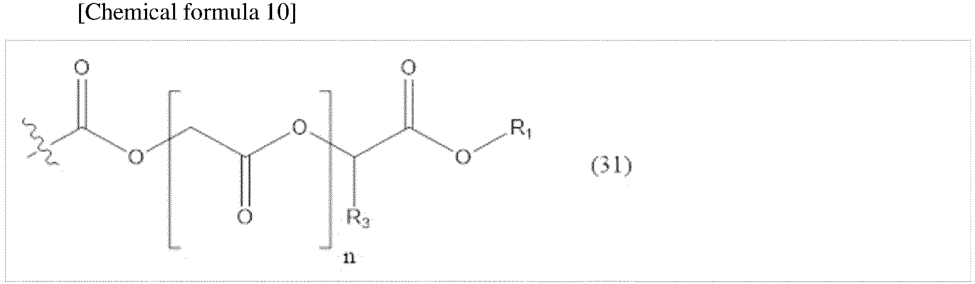 n = 0 to 20

R₁ is an alkyl group having 50 or less carbon atoms.

R₃ is hydrogen or an alkyl group having 10 or less carbon atoms.

That is, in a compound represented by general formula (4), the COOR₈ group may have a structure represented by the above general formula (31).

Although the reason is unknown, an ester group represented by the above general formula (31) has high reactivity in a transesterification reaction. Therefore, when an ester compound having such a functional group is used to partially or entirely constitute the resin component, a thermosetting resin composition having better curing performance than before can be obtained.

Therefore, such a resin can be favorably used for obtaining a thermosetting resin composition having a cure onset temperature of 130°C or less and satisfying, when cured under conditions of baking at 150°C for 30 minutes, a gel fraction of 80% or more.

### (About general formula (31) structure)

The structure of the above general formula (31) is based on an α-substituted carboxylic acid ester skeleton.

In general formula (31), n is 0 to 20.

The lower limit of n is more preferably 0. The upper limit of n is more preferably 5.

Further, it is also possible to use a mixture of a plurality of components having different values of n in the above general formula (31). In this case, the average value nav of n is preferably 0 to 5. The lower limit of nav is more preferably 1. The upper limit of nav is more preferably 3. The measurement of nav can be performed by NMR analysis. Further, the value of n can also be measured by NMR analysis.

In the above general formula (31), as R₁, any alkyl group having 50 or less carbon atoms can be used, and it may be primary, secondary, or tertiary.

The alkyl group in the above alkyl ester group (i.e., R₁ in the above general formula) is an alkyl group having 50 or less carbon atoms. The number of carbon atoms is more preferably within a range of 1 to 20, still more preferably within a range of 1 to 10, and yet more preferably within a range of 1 to 6. The number of carbon atoms is most preferably within a range of 1 to 4. They are preferable because within such a range, the curing reaction can be allowed to proceed well.

Specifically, as the alkyl ester group, for example, those having a known ester group, such as a methyl ester group, an ethyl ester group, a benzyl ester group, an n-propyl ester group, an isopropyl ester group, an n-butyl ester group, an isobutyl ester group, a sec-butyl ester group, and a t-butyl alkyl group, can be used.

A compound having the above functional group (31) can be obtained by allowing a carboxylic acid or carboxylate compound corresponding to the structure of the intended compound to react with an ester compound having the structure of the following general formula (32), which has an active group X introduced at the α-position of the carbonyl group. 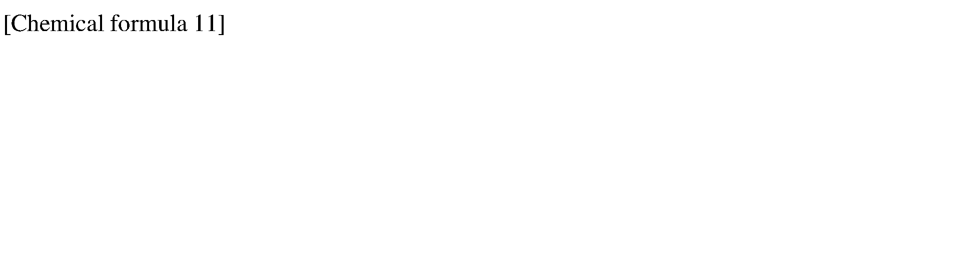 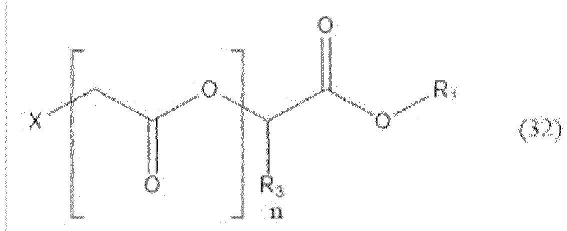 (X represents a halogen or a hydroxyl group)

The general formula expression thereof is as follows.

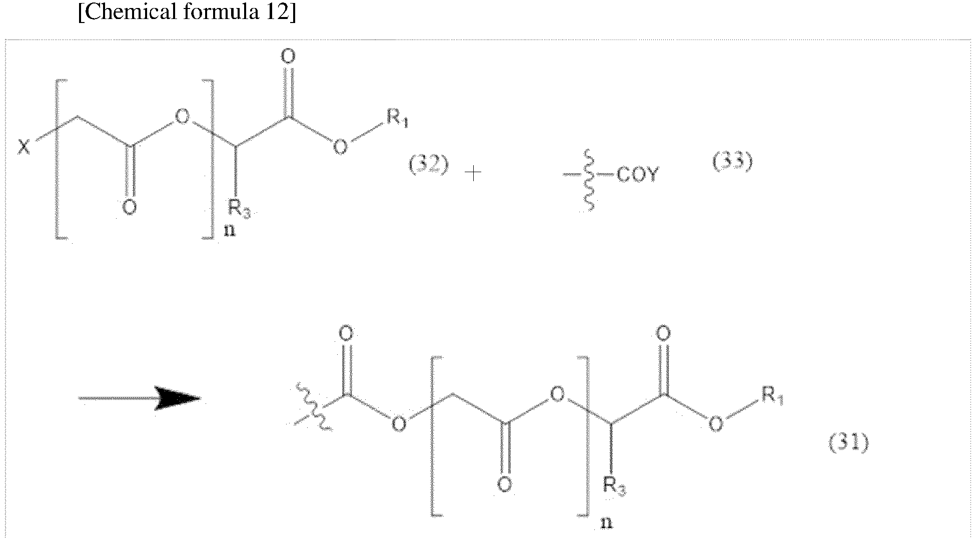

In the above general formula, a compound represented by general formula (33), which can be used as a raw material, can be performed to any carboxylic acid as long as it is a carboxylic acid or a carboxylic acid derivative that can cause the reaction described above. As carboxylic acid derivatives, those wherein Y is OM (carboxylate), OC=OR (acid anhydride), or Cl (acid chloride), etc., can be mentioned. In the case of carboxylates wherein Y = OM, as the carboxylates, a sodium salt, a potassium salt, an amine salt, a zinc salt, and the like can be mentioned. Incidentally, in the case of use as a monomer of a polymer, a compound having an unsaturated group can be used as a compound represented by general formula (33).

The compound represented by the above general formula (32) can be a compound having a skeleton corresponding to the intended structure represented by general formula (31).

In addition, the compound represented by the above general formula (32) is not particularly limited in its production method. Among compounds represented by the above general formula (32), compounds wherein n = 0 are compounds having an active group represented by X at the α-position, and various α-hydroxy acids and α-halogenated carboxylic acids can be mentioned. Specifically, methyl chloroacetate, ethyl chloroacetate, methyl bromoacetate, ethyl bromoacetate, t-butyl bromoacetate, methyl 2-chloropropionate, methyl glycolate, methyl lactate, ethyl lactate, butyl lactate, and the like can be mentioned.

Among compounds represented by the above general formula (32), with respect to compounds wherein n = 1 or more, an example of the production method therefor is shown below.

Incidentally, the contents shown below are an example of a production method, and the invention is not limited to compounds obtained by the following production method.

For example, the compound can be obtained through a reaction between a carboxylic acid having a halogen at the α-position, a salt thereof, or a derivative thereof and a carboxylic acid alkyl ester having a halogen or a hydroxyl group at the α-position. The general formula expression thereof is as follows.

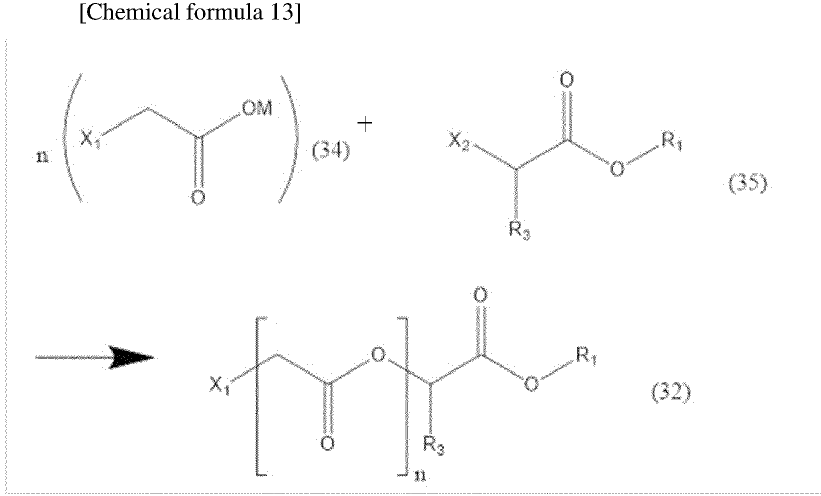

As carboxylic acids having a halogen at the α-position, salts thereof, and derivatives thereof, alkali metal salts of carboxylic acids (potassium salt, sodium salt, etc.), acid anhydrides, acid chlorides, and the like can be mentioned. As a compound represented by the above general formula (34), specifically, sodium chloroacetate or the like can be used.

As carboxylic acid alkyl esters having a halogen or a hydroxyl group at the α-position, alkyl esters of α-substituted carboxylic acid compounds, such as chloroacetic acid, bromoacetic acid, and lactic acid, can be mentioned. The alkyl group of such an alkyl ester is not particularly limited and should just be an alkyl group having 1 to 50 carbon atoms.

Such an alkyl group may be any of primary to tertiary. Specifically, a methyl group, an ethyl group, a benzyl group, an n-propyl group, an isopropyl group, an n-butyl group, an isobutyl group, a sec-butyl group, a t-butyl group, and the like can be mentioned.

In the above reaction, it is preferable that X₁ and X₂ are different in kind. They are preferably different kinds of functional groups having different reactivities, and a combination of functional groups is selected such that X₁ remains unreacted. Specifically, a combination of a chloro group as X₁ and a bromo group as X₂ is particularly preferable.

In addition, by adjusting the mixing ratio between the two kinds of raw materials in the above reaction, the value of n can be adjusted. In the above reaction, it is generally obtained as a mixture of several kinds of compounds having different ns. As the compound represented by the above general formula (4), a compound wherein n has a specific value as a result of purification may be used alone, or it may also be a mixture of several kinds of compounds having different values of n.

A chemical structure represented by the above general formula (31) can be formed by allowing a compound represented by the above general formula (32) to react with various carboxylic acid compounds. Therefore, when a carboxylic acid having an unsaturated group is used as "compound having a carboxylic acid group", a compound having a functional group represented by the above general formula (31) and a polymerizable unsaturated group can be obtained.

Specifically, for example, when a compound represented by the above general formula (32) is allowed to react with (meth)acrylic acid, a compound represented by the following general formula (36) is obtained. 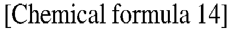 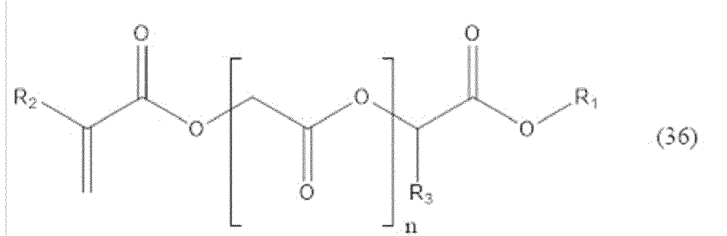 (In the formula, R₁ is an alkyl group having 50 or less carbon atoms.
R₂ is hydrogen or a methyl group.
R₃ is hydrogen or an alkyl group having 10 or less carbon atoms.
n is 1 to 20)

R₁ in a compound represented by the above general formula (36) may be primary, secondary, or tertiary as long as it has 50 or less carbon atoms, but is more preferably primary or secondary, and most preferably primary.

In addition, it is most preferable that n = 0.

### (1-2-b-Y)

The compound represented by the above general formula (4) may be a compound having a functional group represented by the following general formula (41) and/or a functional group represented by the following general formula (42) and an unsaturated group. 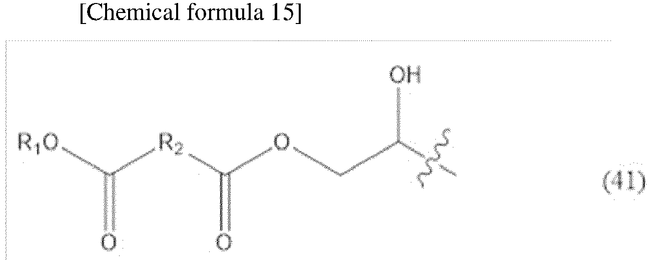 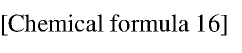 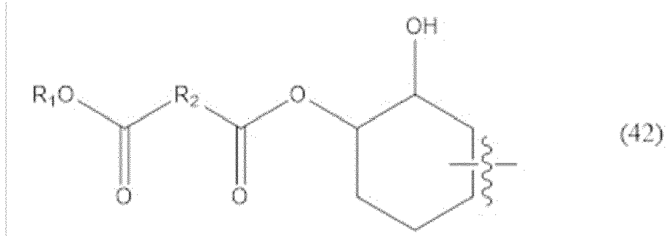
(In both of the above general formulas (41) and (42), R₁ is an alkyl group having 50 or less carbon atoms.
R₂ is an alkylene group having 50 or less carbon atoms and optionally partially containing an oxygen atom or a nitrogen atom)

That is, in the compound represented by general formula (4), the COOR₈ group may have a structure represented by general formula (41) and/or a structure represented by general formula (42).

Therefore, such a resin can be favorably used for obtaining a thermosetting resin composition having a cure onset temperature of 130°C or less and satisfying, when cured under conditions of baking at 150°C for 30 minutes, a gel fraction of 80% or more.

The alkyl group in the above alkyl ester group (i.e., R₁ in the above general formula) is an alkyl group having 50 or less carbon atoms. The number of carbon atoms is more preferably within a range of 1 to 20, still more preferably within a range of 1 to 10, and yet more preferably within a range of 1 to 6. The number of carbon atoms is most preferably within a range of 1 to 4. They are preferable because within such a range, the curing reaction can be allowed to proceed well.

Specifically, as the alkyl group, for example, those having a known ester group, such as a methyl ester group, an ethyl ester group, a benzyl ester group, an n-propyl ester group, an isopropyl ester group, an n-butyl ester group, an isobutyl ester group, a sec-butyl ester group, and a t-butyl alkyl group, can be used.

The R₂ group in the above general formula (41) is an alkylene group having 50 or less carbon atoms and optionally partially containing an oxygen atom or a nitrogen atom. Specific examples thereof include a methylene group, an ethylene group, an n-propylene group, an i-propylene group, and an n-butylene group, and a cyclic structure such as a benzene ring or a cyclohexyl ring may also be present (carbon chains of 1 to 50). Among them, an ethylene group is particularly preferable in that the raw material is inexpensive, and the reactivity is excellent.

As a compound having a structure represented by the above general formula (41), for example, a compound represented by the following general formula (43) can be mentioned. 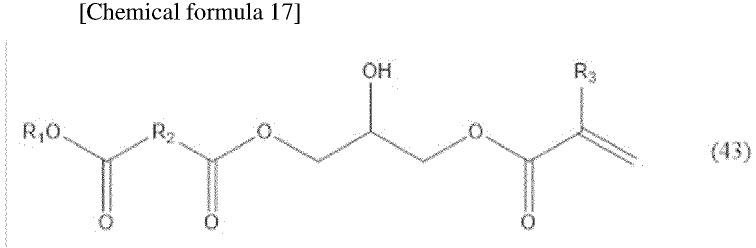
(In the formula, R₁ is an alkyl group having 50 or less carbon atoms.
R₂ is an alkylene group having 50 or less carbon atoms and optionally partially containing an oxygen atom or a nitrogen atom.
R₃ is hydrogen or a methyl group.)

Among ester compounds represented by the above general formula (43), an ester compound represented by the following general formula (45) is more preferable.

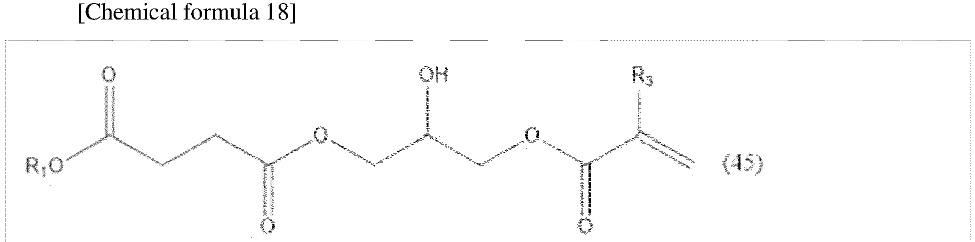

The method for producing an ester compound having a functional group represented by the above general formula (41) is not particularly limited, and a method in which an epoxy compound is allowed to react with a compound having an alkyl ester group and a carboxyl group can be mentioned. The general formula expression thereof is the following reaction.

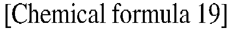

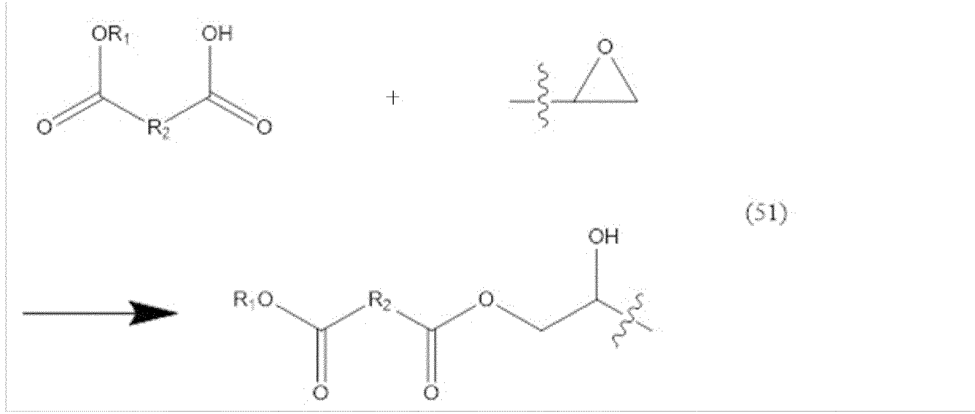

The compound having an alkyl ester group and a carboxyl group to be used in the above reaction can be produced, for example, through a reaction between an acid anhydride and an alcohol like the following reaction.

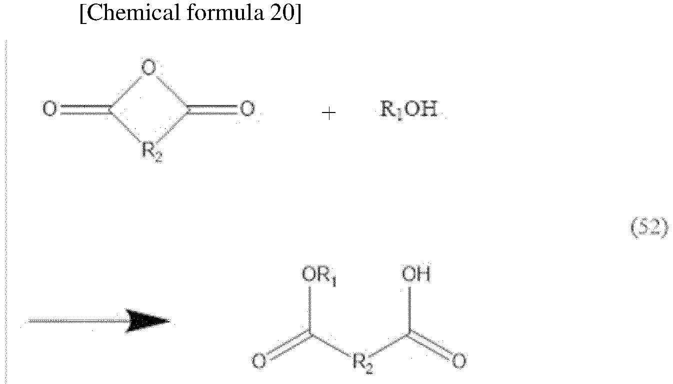

The acid anhydride serving as a raw material in a reaction represented by the above general formula (52) is not particularly limited, and, for example, anhydrides of various dibasic acids having a cyclic structure, such as succinic anhydride, maleic anhydride, phthalic anhydride, hexahydrophthalic anhydride, methylhexahydrophthalic anhydride, benzoic anhydride, and itaconic anhydride, can be used. The reaction represented by the above general formula (52) is a well-known general reaction, and reaction conditions under which it is performed, etc., may be general conditions.

Incidentally, the compound having an alkyl ester group and a carboxyl group used in the synthesis method represented by the above general formula (51) is not limited to being obtained by the method of the above general formula (52), and can also be a compound obtained by any other methods.

In the synthesis method represented by the above general formula (51), an epoxy compound is used as an indispensable component. The epoxy compound is not particularly limited as long as it has an unsaturated double bond and an epoxy group, and any compound can be used.

As epoxy compounds that can be used in the reaction described above, any known compounds can be mentioned. For example, glycidyl methacrylate, 4-hydroxybutyl acrylate glycidyl ether, trimethylolpropane triglycidyl ether, and the like can be mentioned.

For example, when epichlorohydrin is used, by allowing it to react with a phenol compound, a carboxylic acid compound, a hydroxyl group-containing compound, or the like, an epoxy group can be introduced into compounds with various skeletons. By subjecting such any epoxy compound to the reaction described above, a compound having a functional group represented by the general formula (41) described above can be obtained. The general formula for such a reaction is shown below.

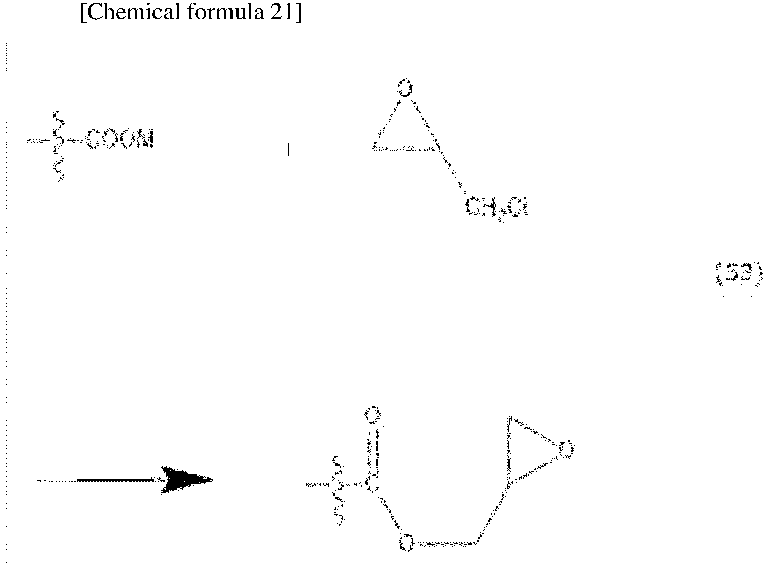

As the hydroxycarboxylic acid having a carboxyl group and an unsaturated group, (meth)acrylic acid or the like can be mentioned.

Further, the epoxy compound described above may be a cyclic epoxy compound.

That is, when a cyclic epoxy compound is used as the epoxy compound, a compound having a structure represented by general formula (42) can be obtained through the following reaction.

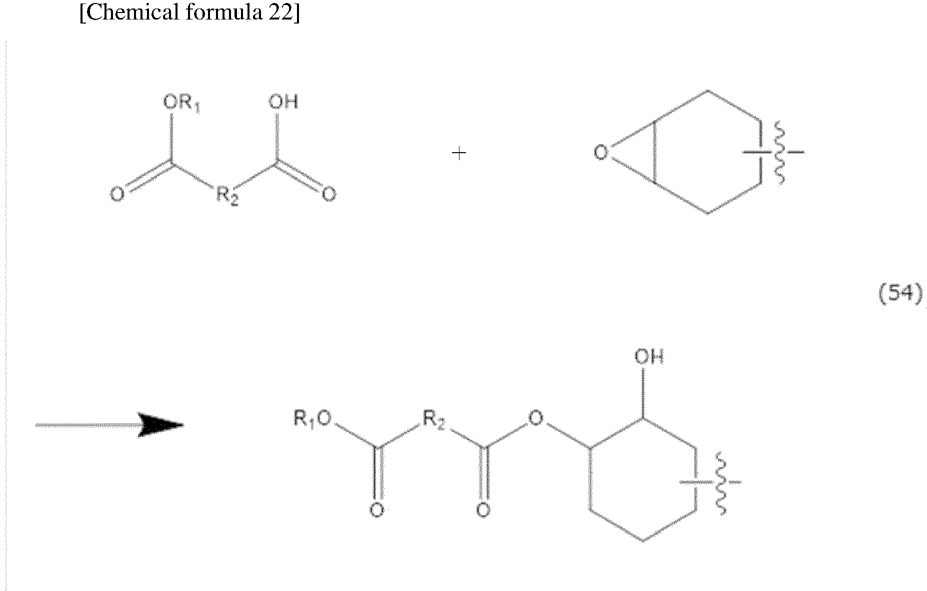

As alicyclic epoxy compounds that can be used in the general formula described above, 3,4-epoxycyclohexylmethyl methacrylate, 3',4'-epoxycyclohexylmethyl 3,4-epoxycyclohexanecarboxylate, and the like can be mentioned.

As specific examples of compounds having a functional group represented by the general formula (41) described above and/or a compound represented by the general formula (42) described above and an unsaturated group, compounds represented by the following general formula and the like can be mentioned.

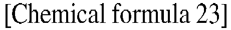

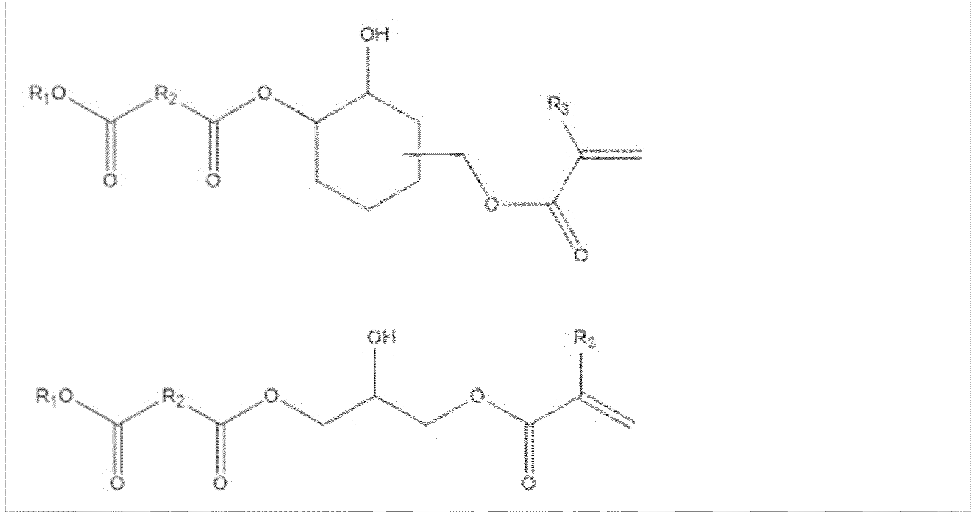

Examples of the specific chemical structure of a compound represented by general formula (4), which can be synthesized by the method exemplified above, are shown below. Incidentally, the invention is not limited to the compounds exemplified below. 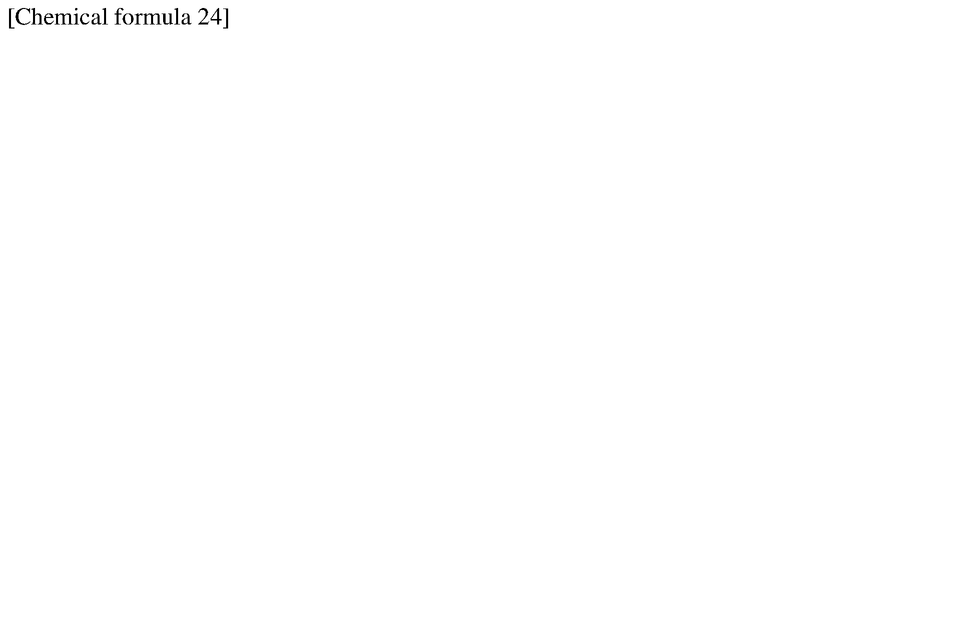 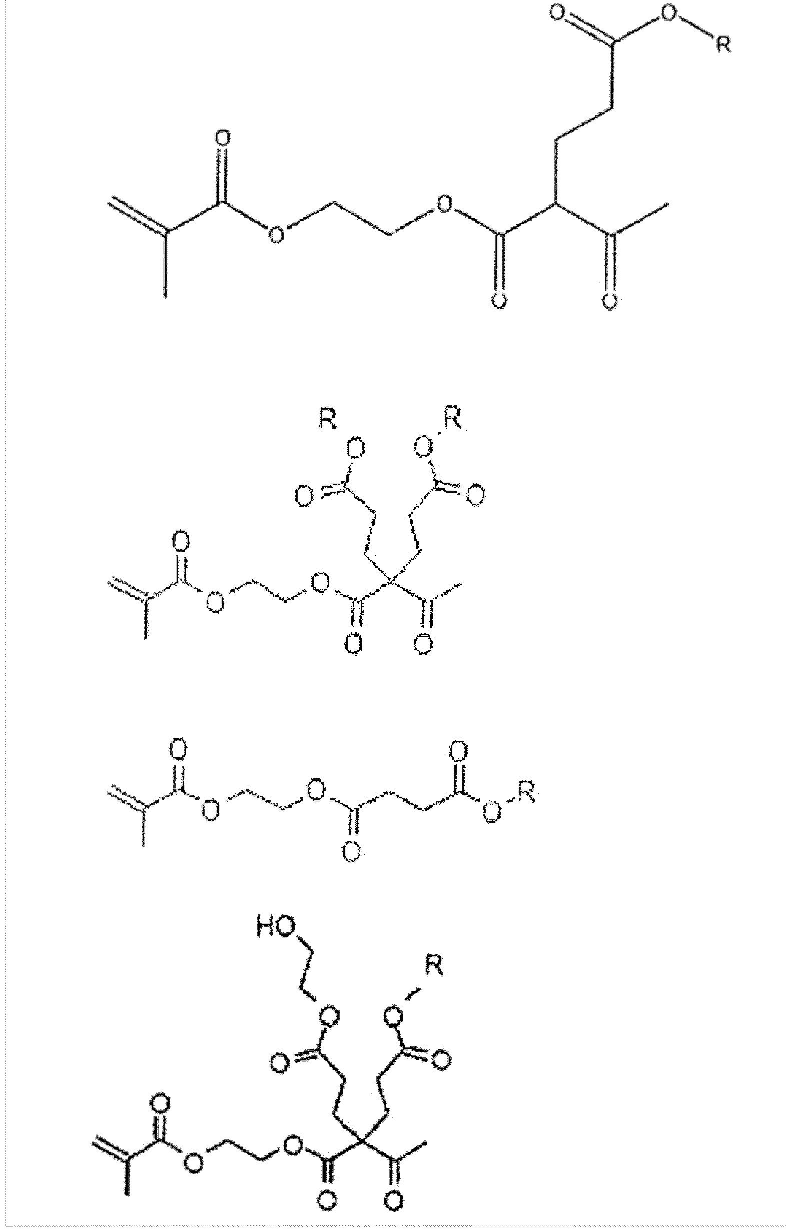 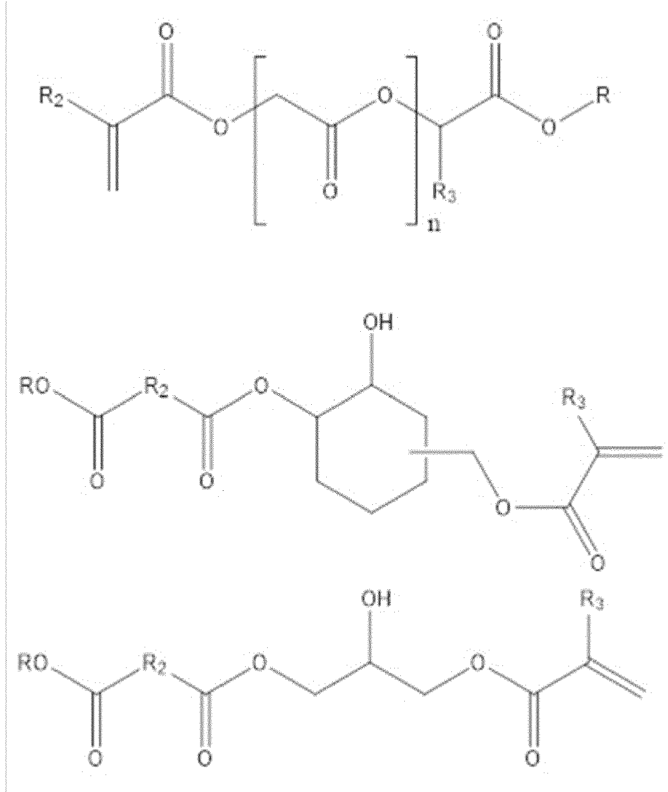 (In the above general formula, R represents an alkyl group having 50 or less carbon atoms)

Also in a compound represented by the above general formula, R in the general formula is an alkyl group having 50 or less carbon atoms. The number of carbon atoms is more preferably within a range of 1 to 20, still more preferably within a range of 1 to 10, and yet more preferably within a range of 1 to 6. The number of carbon atoms is most preferably within a range of 1 to 4. They are preferable because within such a range, the curing reaction can be allowed to proceed well.

### (1-3) Other monomers

The polymer used in the invention can be a homopolymer or copolymer composed only of the monomers shown in (1-1) and (1-2) above, or can also be a copolymer using other monomers.

Other monomers that can be used in the above polymer are not particularly limited, and any monomers having a polymerizable unsaturated group can be used. Monomers that can be used are exemplified below.

Examples include:
various α-olefins such as ethylene, propylene, and butene-1;
various halogenated olefins excluding fluoroolefins, such as vinyl chloride and vinylidene chloride;
various aromatic vinyl compounds such as styrene, α-methylstyrene, and vinyltoluene;
various amino group-containing amido-based unsaturated monomers such as N-dimethylaminoethyl (meth)acrylamide, N-diethylaminoethyl (meth)acrylamide, N-dimethylaminopropyl (meth)acrylamide, and N-diethylaminopropyl (meth)acrylamide;
various dialkylaminoalkyl (meth)acrylates such as dimethylaminoethyl (meth)acrylate and diethylaminoethyl (meth)acrylate;
various amino group-containing monomers such as tert-butylaminoethyl (meth)acrylate, tert-butylaminopropyl (meth)acrylate, aziridinylethyl (meth)acrylate, pyrrolidinylethyl (meth)acrylate, and piperidinylethyl (meth)acrylate;
various carboxyl group-containing monomers such as (meth)acrylic acid, crotonic acid, itaconic acid, maleic acid, and fumaric acid;
various epoxy group-containing monomers such as glycidyl (meth)acrylate, β-methylglycidyl (meth)acrylate, and (meth)allyl glycidyl ether;
mono- or diesters of various α,β-unsaturated dicarboxylic acids, such as maleic acid, fumaric acid, and itaconic acid, and monohydric alcohols having 1 to 18 carbon atoms;
various hydrolyzable silyl group-containing monomers such as vinyltrimethoxysilane, vinyltriethoxysilane, vinyltripropoxysilane, vinylmethyldiethoxysilane, vinyltris((3-methoxyethoxy)silane, allyltrimethoxysilane, trimethoxysilylethyl vinyl ether, triethoxysilylethyl vinyl ether, methyldimethoxysilylethyl vinyl ether, trimethoxysilylpropyl vinyl ether, triethoxysilylpropyl vinyl ether, methyldiethoxysilylpropyl vinyl ether, γ-(meth)acryloyloxypropyltrimethoxysilane, γ-(meth)acryloyloxypropyltriethoxysilane, and γ-(meth)acryloyloxypropylmethyldimethoxysilane;
various fluorine atom-containing monomers including various fluorine-containing α-olefins such as vinyl fluoride, vinylidene fluoride, trifluoroethylene, tetrafluoroethylene, chlorotrifluoroethylene, bromotrifluoroethylene, pentafluoropropylene, and hexafluoropropylene; various perfluoroalkyl-perfluorovinyl ethers or (per)fluoroalkyl vinyl ethers (provided that the number of carbon atoms in the alkyl group is within a range of 1 to 18) such as trifluoromethyl trifluorovinyl ether, pentafluoroethyl trifluorovinyl ether, and heptafluoropropyl trifluorovinyl ether; and the like;
various alkyl vinyl ethers or substituted alkyl vinyl ethers, such as methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, 2-ethylhexyl vinyl ether, chloromethyl vinyl ether, chloroethyl vinyl ether, benzyl vinyl ether, and phenylethyl vinyl ether;
various cycloalkyl vinyl ethers such as cyclopentyl vinyl ether, cyclohexyl vinyl ether, and methylcyclohexyl vinyl ether; various aliphatic vinyl carboxylates such as vinyl-2,2-dimethylpropanoate, vinyl-2,2-dimethylbutanoate, vinyl-2,2-dimethylpentanoate, vinyl-2,2-dimethylhexanoate, vinyl-2-ethyl-2-methylbutanoate, vinyl-2-ethyl-2-methylpentanoate, vinyl-3-chloro-2,2-dimethylpropanoate, and the like, further as well as vinyl acetate, vinyl propionate, vinyl butyrate, vinyl isobutyrate, vinyl caproate, vinyl caprylate, vinyl caprate, vinyl laurate, C₉ branched aliphatic vinyl carboxylates, C₁₀ branched aliphatic vinyl carboxylates, C₁₁ branched aliphatic vinyl carboxylates, and vinyl stearate; and vinyl esters of carboxylic acids having a cyclic structure, such as vinyl cyclohexanecarboxylate, vinyl methylcyclohexanecarboxylate, vinyl benzoate, and vinyl p-tert-butylbenzoate.

In the invention, by combining the various monomers (1-1) to (1-3) described above as necessary and polymerizing them, a compound having both an alkyl ester group and a hydroxyl group, a compound having an alkyl ester group, or a compound having a hydroxyl group can be obtained. Further, the functional groups necessary for water solubilization described above can also be combined in the necessary proportions according to the purpose and introduced into the resin.

The polymer is not particularly limited in its production method and can be produced through polymerization by a known method. More specifically, polymerization methods such as solution polymerization in an organic solvent, emulsion polymerization in water, mini-emulsion polymerization in water, aqueous solution polymerization, suspension polymerization, and UV curing can be mentioned.

In addition, in the case where solution polymerization in an organic solvent is performed, the polymer may subsequently be made aqueous by a known operation and thus converted into the form usable in the thermosetting resin composition of the invention.

In addition, side-chain functional groups of the polymer obtained by polymerizing a composition containing the monomers described above may be allowed to react to introduce a hydroxyl group and/or an alkyl ester group into the side chain. Reactions to the side chain are not particularly limited, and transesterification, a reaction with isocyanate, a reaction with epoxy, a reaction with silane, a reaction with a melamine resin, an addition reaction, a hydrolysis reaction, dehydration condensation, a substitution reaction, and the like can be mentioned.

The molecular weight of the polymer is not particularly limited, and, for example, the weight average molecular weight can be 3,000 to 1,000,000. The upper limit of the weight average molecular weight is more preferably 300,000, still more preferably 100,000, and yet more preferably 50,000. The lower limit of the weight average molecular weight is more preferably 3,000, and still more preferably 4,000.

A water-soluble acrylic resin having a weight average molecular weight usually within a range of 5,000 to 100,000, preferably 5,000 to 50,000, or acrylic resin particles which are dispersoids in an acrylic resin emulsion having a weight average molecular weight of 50,000 or more, preferably 100,000 or more, can be mentioned.

The aqueous acrylic resin desirably contains a hydroxyl group and, from the viewpoint of water dispersibility, compatibility with other components, the curability of the formed coating film, and the like, preferably has a hydroxyl value generally within a range of 20 to 200 mgKOH/g, particularly 20 to 150 mgKOH/g. In addition, it is preferable that the aqueous acrylic resin has an acid value generally within a range of 1 to 100 mgKOH/g, particularly 10 to 70 mgKOH/g.

Further, the alkyl ester group is preferably contained in an amount of 5 to 95 wt% as the mixing proportion of each monomer.

### (2) Polyester polyol

A polyester polyol can usually be produced through an esterification reaction or a transesterification reaction between an acid component and an alcohol component.

As the acid component, a compound that is usually used as an acid component in the production of a polyester resin can be mentioned. As such acid components, for example, aliphatic polybasic acids, alicyclic polybasic acids, aromatic polybasic acids, and the like, as well as anhydrides and esterification products thereof, can be mentioned.

In addition, the polyester resin may also be one obtained by allowing a monoepoxy compound such as α-olefin epoxide such as propylene oxide, butylene oxide or a like, or Cardura E10 (manufactured by Japan Epoxy Resin Co., Ltd., trade name, glycidyl ester of a synthetic highly branched saturated fatty acid) to react with the acid group of a polyester resin.

In addition, the aqueous polyester resin may also be urethane-modified.

The polyester resin can have a weight average molecular weight within a range of 2,000 to 100,000, preferably 3,000 to 30,000. The weight average molecular weight of a polyester resin can be measured in the same manner as for the weight average molecular weight of the above acrylic resin.

As the aliphatic polybasic acids, as well as anhydrides and esterification products thereof, generally, aliphatic compounds having two or more carboxyl groups in one molecule, acid anhydrides of the aliphatic compounds, and esterification products of the aliphatic compounds, for example, aliphatic polycarboxylic acids such as succinic acid, glutaric acid, adipic acid, pimelic acid, suberic acid, azelaic acid, sebacic acid, undecanedioic acid, dodecanedioic acid, brassylic acid, octadecanedioic acid, citric acid, and butanetetracarboxylic acid; anhydrides of the aliphatic polycarboxylic acids; about C₁ to about C₄ lower-alkyl esterification products of the aliphatic polycarboxylic acids; and the like, as well as combinations thereof, can be mentioned.

As the aliphatic polybasic acids, from the viewpoint of the smoothness of the resulting coating film, adipic acid and/or adipic anhydride is preferable.

As the alicyclic polybasic acids, as well as anhydrides and esterification products thereof, generally, compounds having one or more alicyclic structures and two or more carboxyl groups in one molecule, acid anhydrides of the compounds, and esterification products of the compounds can be mentioned. The alicyclic structure is mainly a 4- to 6-membered ring structure. As the alicyclic polybasic acids, as well as anhydrides and esterification products thereof, for example, alicyclic polycarboxylic acids such as 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, and 1,3,5-cyclohexanetricarboxylic acid; anhydrides of the alicyclic polycarboxylic acids; about C₁ to about C₄ lower-alkyl esterification products of the alicyclic polycarboxylic acids; and the like, as well as combinations thereof, can be mentioned.

As the alicyclic polybasic acids, as well as anhydrides and esterification products thereof, from the viewpoint of the smoothness of the resulting coating film, 1,2-cyclohexanedicarboxylic acid, 1,2-cyclohexanedicarboxylic anhydride, 1,3-cyclohexanedicarboxylic acid, 1,4-cyclohexanedicarboxylic acid, 4-cyclohexene-1,2-dicarboxylic acid, and 4-cyclohexene-1,2-dicarboxylic anhydride are preferable, and 1,2-cyclohexanedicarboxylic acid and/or 1,2-cyclohexanedicarboxylic anhydride is more preferable.

The aromatic polybasic acids, as well as anhydrides and esterification products thereof, are aromatic compounds generally having two or more carboxyl groups in one molecule, acid anhydrides of the aromatic compounds, and esterification products of the aromatic compounds. For example, aromatic polycarboxylic acids such as phthalic acid, isophthalic acid, terephthalic acid, naphthalenedicarboxylic acid, 4,4'-biphenyldicarboxylic acid, trimellitic acid, and pyromellitic acid; anhydrides of the aromatic polycarboxylic acids; about C₁ to about C₄ lower-alkyl esterification products of the aromatic polycarboxylic acids; and the like, as well as combinations thereof, can be mentioned.

As the aromatic polybasic acids, as well as anhydrides and esterification products thereof, phthalic acid, phthalic anhydride, isophthalic acid, trimellitic acid, and trimellitic anhydride are preferable.

In addition, examples of the above acid component include acid components other than the above aliphatic polybasic acids, alicyclic polybasic acids, and aromatic polybasic acids. For example, fatty acids such as coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, and safflower oil fatty acid; monocarboxylic acids such as lauric acid, myristic acid, palmitic acid, stearic acid, oleic acid, linoleic acid, linolenic acid, benzoic acid, p-tert-butylbenzoic acid, cyclohexanoic acid, and 10-phenyloctadecanoic acid; and hydroxycarboxylic acids such as lactic acid, 3-hydroxybutanoic acid, and 3-hydroxy-4-ethoxybenzoic acid, as well as any combinations thereof, can be mentioned.

Examples of the above alcohol component include polyhydric alcohols having two or more hydroxyl groups in one molecule. For example, dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 1,1,1-trimethylolpropane, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexane dimethanol, tricyclodecane dimethanol, hydroxypivalic acid neopentyl glycol ester, hydrogenated bisphenol A, hydrogenated bisphenol F, and dimethylolpropionic acid; polylactone diols obtained by adding a lactone compound such as ε-caprolactone to the above dihydric alcohols; ester diol compounds such as bis(hydroxyethyl) terephthalate; polyether diol compounds such as alkylene oxide adducts of bisphenol A, polyethylene glycol, polypropylene glycol, and polybutylene glycol; trihydric or higher hydric alcohols such as glycerin, trimethylolethane, trimethylolpropane, diglycerin, triglycerin, 1,2,6-hexanetriol, pentaerythritol, dipentaerythritol, tris(2-hydroxyethyl)isocyanuric acid, sorbitol, and mannitol; polylactone polyol compounds obtained by adding a lactone compound such as ε-caprolactone to the above trihydric or higher hydric alcohols; and fatty acid esterification products of glycerin, and the like can be mentioned.

In addition, examples of the above alcohol component include alcohol components other than the above polyhydric alcohols. For example, monohydric alcohols such as methanol, ethanol, propyl alcohol, butyl alcohol, stearyl alcohol, and 2-phenoxyethanol; alcohol compounds obtained by allowing a monoepoxy compound such as propylene oxide, butylene oxide, or "Cardura E10" (trade name, manufactured by HEXION Specialty Chemicals, glycidyl ester of a synthetic highly branched saturated fatty acid) to react with an acid, and the like can be mentioned.

Polyester polyols are not particularly limited and can be produced in a usual manner. For example, a polyester polyol can be produced by heating the above acid component and alcohol component in a nitrogen stream at about 150 to about 250°C for about 5 to about 10 hours to cause an esterification reaction or a transesterification reaction between the acid component and the alcohol component.

The carboxyl group of the polyester resin can be neutralized using the above basic substance as necessary.

The aqueous polyester resin desirably contains a hydroxyl group and, from the viewpoint of water dispersibility, compatibility with other components, the curability of the formed coating film, and the like, preferably has a hydroxyl value generally within a range of 20 to 200 mgKOH/g, particularly 20 to 150 mgKOH/g. In addition, it is preferable that the aqueous polyester resin has an acid value generally within a range of 1 to 100 mgKOH/g, particularly 10 to 70 mgKOH/g.

### (3) Ester compound

As the resin component (A) used in the invention, an ester compound having an alkyl ester group can also be used. As such ester compounds, for example, those exemplified below can be mentioned.

### (3-1) (Compound obtained through an addition reaction between a compound having an active methylene group and a vinyl group)

A compound having an active methylene group represented by the following general formula (61) causes an addition reaction with a vinyl group. 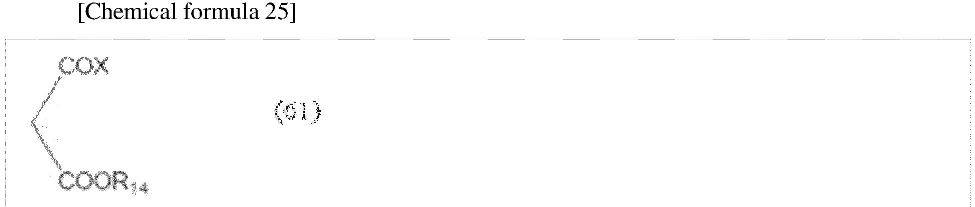
(In the formula, R₁₄ represents an alkyl group having 50 or less carbon atoms.
X represents an OR₁₄ group or a hydrocarbon group having 5 or less carbon atoms)

The alkyl ester group is not particularly limited in its structure, and those having a known ester group, such as a methyl ester group, an ethyl ester group, a benzyl ester group, an n-propyl ester group, an isopropyl ester group, an n-butyl ester group, an isobutyl ester group, and a sec-butyl ester group, can be used.

Specifically, as such compounds having an active methylene group, a malonic acid ester, an acetoacetic acid ester, and the like can be mentioned. Compounds obtained by adding these compounds to a vinyl compound can be used.

The compound having an active methylene group can be added to a double bond through a Michael addition reaction. A general Michael addition reaction using such a compound having an active methylene group is represented by the following formula.

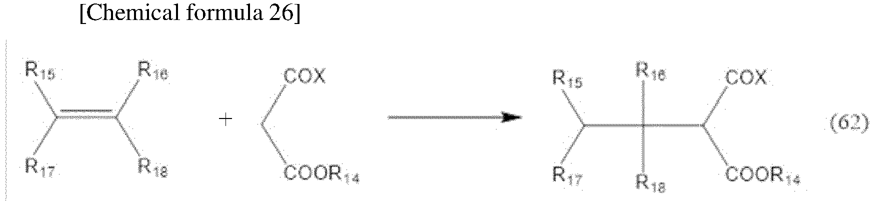

A compound obtained through such a reaction has a structure represented by general formula (61), and this is a compound having two or more alkyl ester groups and thus can be particularly favorably used for the purpose of the invention. Particularly in the case where (meth)acrylic acid or its derivative is used as a vinyl compound of the above general formula, a reaction with 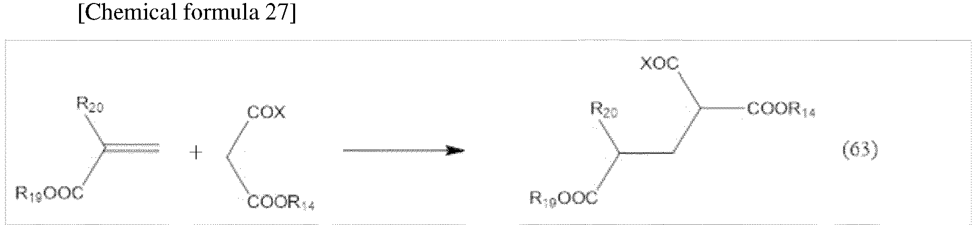 is caused.

In the above general formula, R₁₄ represents an alkyl group having 50 or less carbon atoms.

R₂₀ represents hydrogen or a methyl group.

R₁₉ is not particularly limited and can be any functional group according to the purpose.

An ester compound obtained through such a reaction has a structural unit represented by the following structure in the molecule.

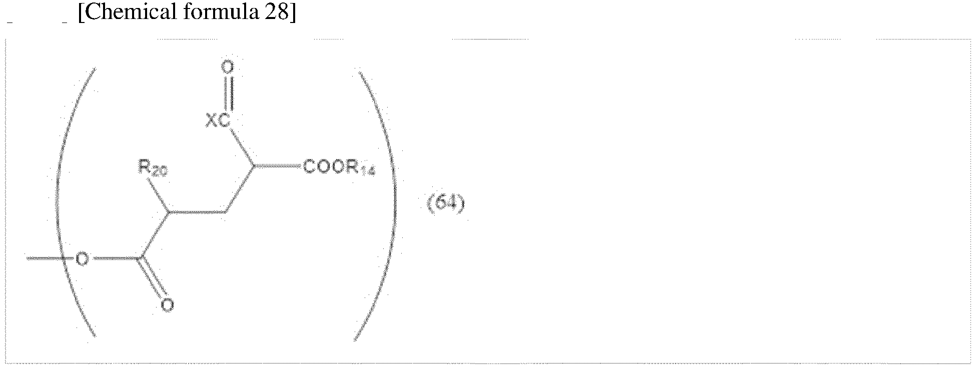

When an acrylic acid derivative having two or more unsaturated bonds is used as a raw material in the reaction described above, an ester compound having two or more structures represented by the general formula (64) described above in the molecule can also be obtained.

That is, a compound having such a functional group and having a structure represented by the following general formula can be favorably used in the invention.

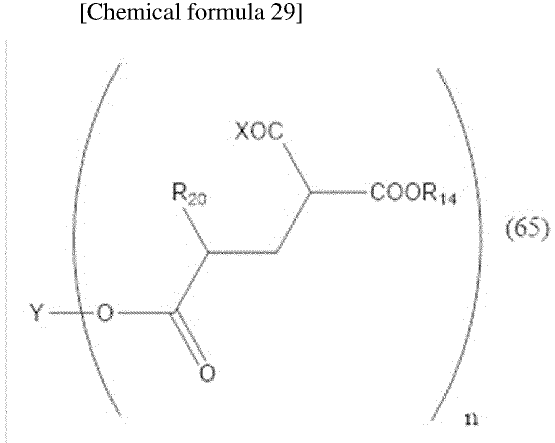

Such a compound is preferable in that it has high transesterification reactivity, has a large number of COOR groups in the molecule, and thus provides good curability.

It is most preferable that n in the above general formula is 2 to 12. In addition, Y is not particularly limited as long as its structure is such that the molecular weight of the compound is 3,000 or less, and represents a hydrocarbon group optionally having any functional group such as a hydroxyl group, an ester group, or an ether group.

Although a large number of compounds having a structure derived from an active methylene group-containing compound ester are known, compounds having the above structure are particularly preferable in that an addition reaction between a malonic acid ester and a vinyl group proceeds easily, which facilitates synthesis, and also that the number of ester groups can be adjusted by selecting the starting material, which allows the curing performance and the performance of the resin after curing to be easily adjusted.

Specifically, dimethyl malonate, di-n-butyl malonate, and the like can be favorably used.

Such a compound can be obtained by performing a Michael addition reaction with a compound having an active methylene group using, as a raw material, various (meth)acrylic acid derivatives having one or more unsaturated bonds. The above "(meth)acrylic acid derivatives having one or more unsaturated bonds" are not particularly limited, and the following examples can be mentioned.

As examples of (meth)acrylates having one functional group, methyl (meth)acrylate, ethyl (meth)acrylate, isopropyl (meth)acrylate, n-butyl (meth)acrylate, iso-butyl (meth)acrylate, sec-butyl (meth)acrylate, t-butyl (meth)acrylate, and the like can be mentioned.

Examples of (meth)acrylates having two functional groups include 1,4-butanediol di(meth)acrylate, 1,3-butanediol di(meth)acrylate, 1,6-hexanediol di(meth)acrylate, ethylene glycol di(meth)acrylate, diethylene glycol di(meth)acrylate, triethylene glycol di(meth)acrylate, polyethylene glycol di(meth)acrylate, dipropylene glycol di(meth)acrylate, tripropylene glycol di(meth)acrylate, polypropylene glycol di(meth)acrylate, neopentyl glycol di(meth)acrylate, hydroxypivalic acid neopentyl glycol di(meth)acrylate, 1,6-hexanediol di(meth)acrylate, 1,9-nonanediol di(meth)acrylate, 1,10-decanediol di(meth)acrylate, glycerin di(meth)acrylate, dimethyloltricyclodecane di(meth)acrylate (DCP-A), EO adduct diacrylate of bisphenol A (manufactured by Kyoeisha Chemical Co., Ltd.; Light Acrylate BP-4EA, BP-10EA), and PO adduct diacrylate of bisphenol A (manufactured by Kyoeisha Chemical Co., Ltd.; BP-4PA, BP-10PA, etc.). Among them, PO adduct diacrylate of bisphenol A (manufactured by Kyoeisha Chemical Co., Ltd.; BP-4PA), dimethyloltricyclodecane di(meth)acrylate (DCP-A), and the like can be preferably used.

Examples of (meth)acrylates having three functional groups include trimethylolmethane tri(meth)acrylate, trimethylolpropane tri(meth)acrylate, trimethylolpropane ethylene oxide-modified tri(meth)acrylate, trimethylolpropane propylene oxide-modified tri(meth)acrylate, pentaerythritol tri(meth)acrylate, glycerinpropoxy tri(meth)acrylate, tris(2-(meth)acryloyloxyethyl)isocyanurate, and the like. Among them, trimethylolpropane trimethacrylate, pentaerythritol trimethacrylate, and the like can be preferably used.

Examples of (meth)acrylates having four functional groups include dipentaerythritol tetra(meth)acrylate, pentaerythritol tetra(meth)acrylate, pentaerythritol ethylene oxide-modified tetra(meth)acrylate, pentaerythritol propylene oxide-modified tetra(meth)acrylate, ditrimethylolpropane tetra(meth)acrylate, and the like. Among them, ditrimethylolpropane tetra(meth)acrylate, pentaerythritol tetra(meth)acrylate, and the like can be preferably used.

As examples of (meth)acrylates having four or more functional groups, polyfunctional (meth)acrylates such as pentaerythritol tetra(meth)acrylate, pentaerythritol ethylene oxide-modified tetra(meth)acrylate, ditrimethylolpropane tetra(meth)acrylate, dipentaerythritol tetra(meth)acrylate, dipentaerythritol penta(meth)acrylate, ditrimethylolpropane penta(meth)acrylate, propionic acid-modified dipentaerythritol penta(meth)acrylate, dipentaerythritol hexa(meth)acrylate, ditrimethylolpropane hexa(meth)acrylate, and hexa(meth)acrylates of caprolactone-modified products of dipentaerythritol can be mentioned.

Specific examples of compounds that fall under the compound (3) as described above are shown below.

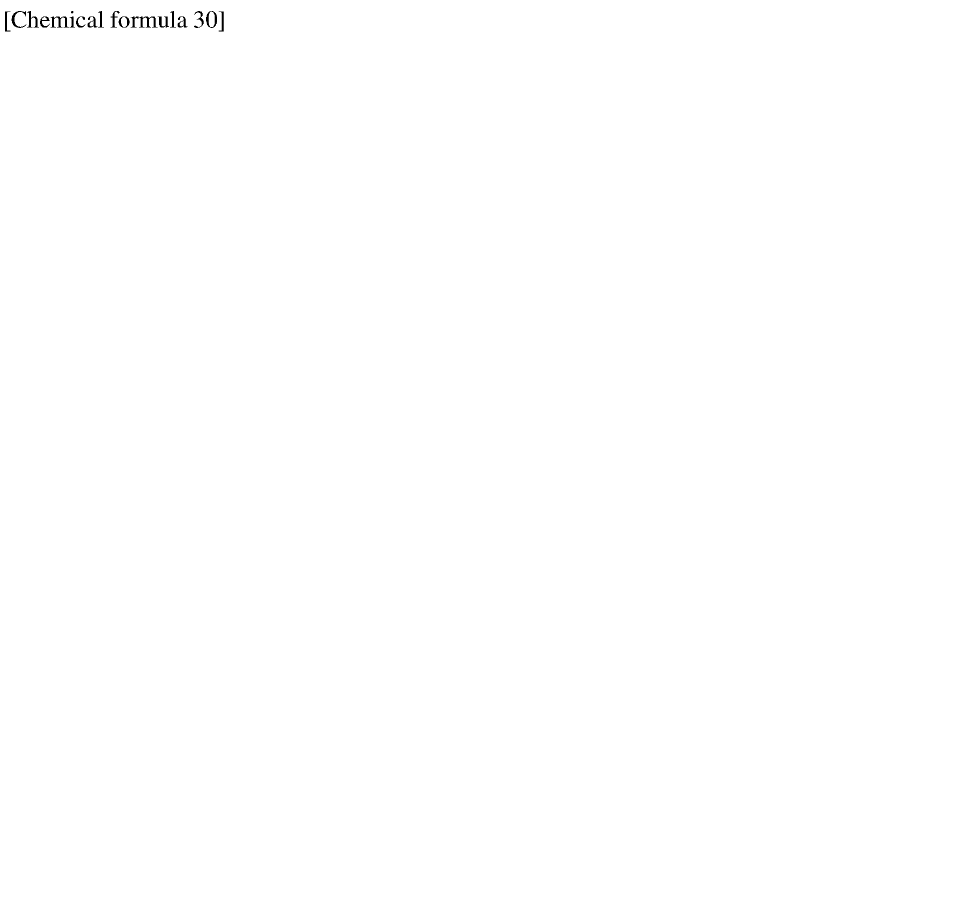

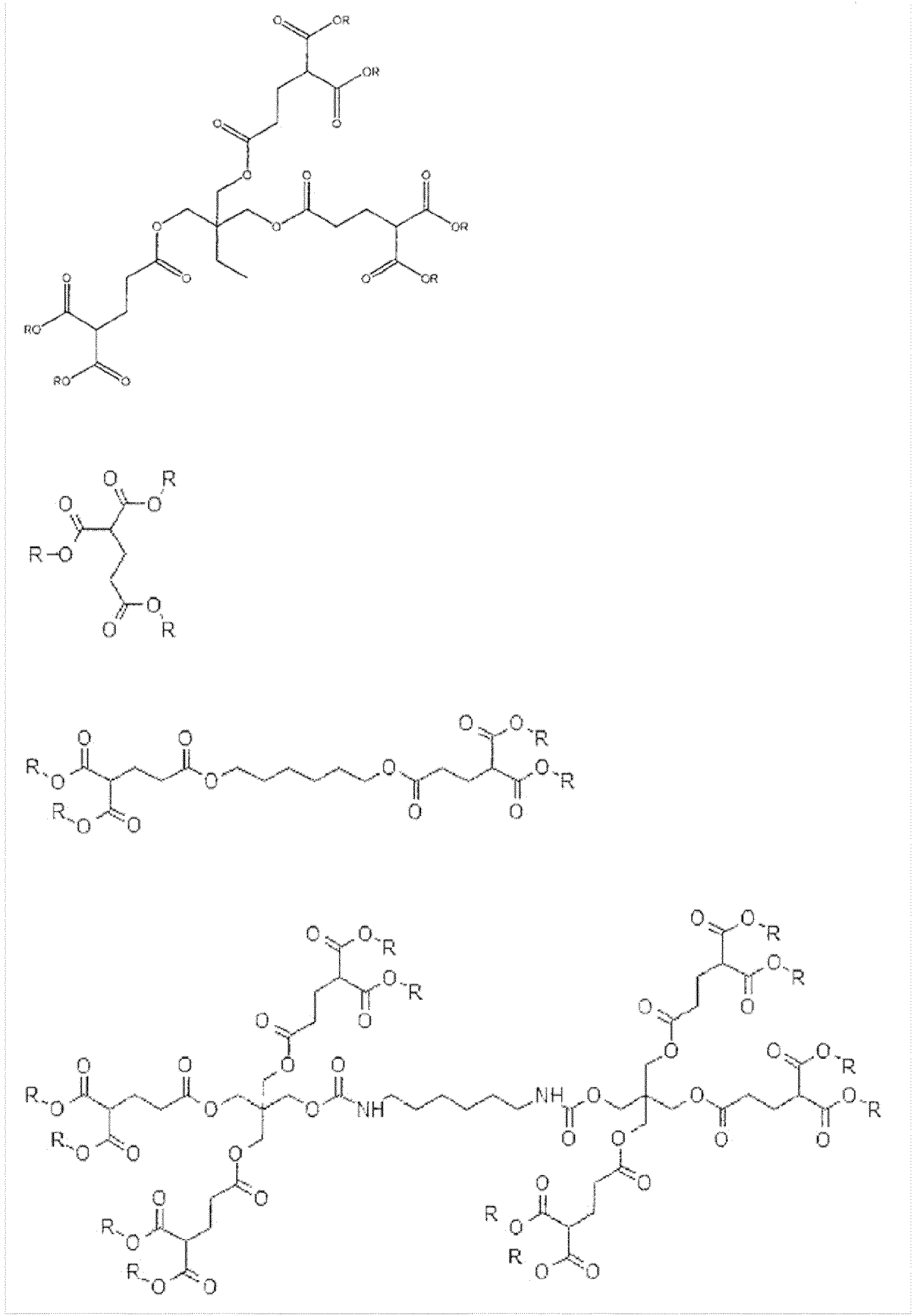

In the formula, R represents an alkyl group having 50 or less carbon atoms.

It is preferable that the compound (3) has three or more alkyl esters serving as crosslinking points in the molecule. That is, the larger the number of alkyl ester groups in the molecule, the higher the crosslinking density of the resin after curing, and the better the hardness of the cured product. This provides a cured product having excellent physical properties and thus is preferable.

It is more preferable that the number of alkyl esters in the molecule is 5 or more.

The dissolution or dispersion of such a compound in an aqueous medium can be performed by a method in which the compound is diluted with a water-soluble solvent and added, or by emulsification or dispersion using an emulsifier. In this case, a method in which the compound is mixed with other components to be used together and then emulsified and dispersed with an emulsifier, a method in which the above compound is emulsified and dispersed alone with an emulsifier to prepare a dispersion, followed by mixing with other components, and the like can be mentioned. In addition, examples of facilities used for emulsification and dispersion include a homomixer, a high-pressure homogenizer, a disper mixer, a ribbon mixer, a propeller mixer, high-pressure emulsification, and like methods.

### (3-2) Alkyl esterification product of polyfunctional carboxylic acid

A compound obtained through a reaction between a polyfunctional carboxylic acid and an alcohol can also be used as the compound having an alkyl ester group of the invention. Such a reaction can be represented by the following general formula.

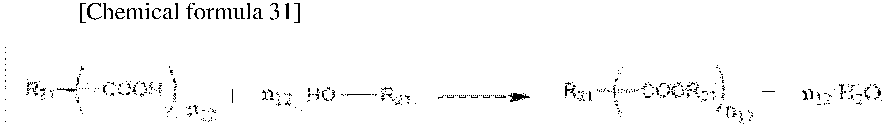

Incidentally, a compound having an alkyl ester group obtained by subjecting a carboxylic acid derivative to the same reaction can be similarly used for the purpose of the invention.

Various polyfunctional carboxylic acids are common raw materials that are available widely and inexpensively for a large number of applications, including polyester raw materials, polyamide raw materials, neutralizing agents, synthetic raw materials, and others. A compound obtained by the alkyl esterification of such a polyfunctional carboxylic acid by a known method can also be used in the invention.

When such a compound is used as the compound having an alkyl ester group, esterification is possible inexpensively by a known method, and a polyvalent ester group can be introduced with a relatively low molecular weight. In addition, as a result of esterification, compatibility with organic solvents improves, allowing for favorable use; therefore, this is preferable.

The polyfunctional carboxylic acid used here is not particularly limited, and, for example, those having 50 or less carbon atoms can be used.

More specifically, aliphatic polycarboxylic acids such as malonic acid, succinic acid, glutaric acid, adipic acid, pimelic acid, suberic acid, azelaic acid, sebacic acid, undecanedioic acid, dodecanedioic acid, brassylic acid, octadecanedioic acid, citric acid, and butanetetracarboxylic acid;
alicyclic polycarboxylic acids such as 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, and 1,3,5-cyclohexanetricarboxylic acid;
aromatic polycarboxylic acids such as phthalic acid, isophthalic acid, terephthalic acid, naphthalenedicarboxylic acid, 4,4'-biphenyldicarboxylic acid, trimellitic acid, and pyromellitic acid;
fatty acids such as coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, and safflower oil fatty acid; monocarboxylic acids such as lauric acid, myristic acid, palmitic acid, stearic acid, oleic acid, linoleic acid, linolenic acid, benzoic acid, p-tert-butylbenzoic acid, cyclohexanoic acid, and 10-phenyloctadecanoic acid; hydroxycarboxylic acids such as lactic acid, 3-hydroxybutanoic acid, and 3-hydroxy-4-ethoxybenzoic acid, and the like can be mentioned.

In the invention, the alkyl esterification method for the polyfunctional carboxylic acids described above is not particularly limited, and a known method such as dehydration condensation with an alcohol can be applied. In addition, a method in which a derivative of a polyfunctional carboxylic acid is alkyl-esterified can also be mentioned.

An alkyl esterification product of the polyfunctional carboxylic acid preferably has a molecular weight of 10,000 or less. Such a molecular weight is preferable because, as a result, molecules can move easily, and curing proceeds. The molecular weight may also be lower, such as 6,000 or less, 4,000 or less, or 2,000 or less.

### (3-3) Compound having two or more functional groups represented by general formula (31)

Compounds having two or more functional groups represented by the general formula (31) described above can also be used in the invention.

Functional groups represented by general formula (31) have been described in detail above. Such a functional group is formed by allowing a compound represented by general formula (32) to react with a carboxylic acid. Therefore, by allowing various known polycarboxylic acids to react with a compound represented by the general formula (32) described above, compounds having two or more functional groups represented by the above general formula (31) can be obtained. Further, a reaction with a hydroxycarboxylic acid having a hydroxyl group produces a compound having a hydroxyl group and general formula (32), and this can also be used as a component of a thermosetting resin composition whose curing reaction takes place through transesterification.

In order to be used in the thermosetting resin composition of the invention, the above compound is preferably a compound having two or more functional groups, and it is possible to use a polycarboxylic acid having two or more carboxyl groups, a hydroxycarboxylic acid having a carboxyl group and a hydroxyl group, or the like.

Various polycarboxylic acids are common raw materials that are available widely and inexpensively for a large number of applications, including polyester raw materials, polyamide raw materials, neutralizing agents, synthetic raw materials, and others. A compound obtained by converting such a polycarboxylic acid into a functional group represented by the general formula (32) described above by a known method can also be used in the invention.

When such a compound is used as the compound having a functional group represented by general formula (32), esterification is possible inexpensively by a known method, and a polyvalent ester group can be introduced with a relatively low molecular weight. In addition, as a result of esterification, compatibility with organic solvents improves, allowing for favorable use; therefore, this is preferable.

Polycarboxylic acids used here are not particularly limited, and, for example, those having 50 or less carbon atoms can be used.

More specifically, aliphatic polycarboxylic acids such as malonic acid, succinic acid, glutaric acid, adipic acid, pimelic acid, suberic acid, azelaic acid, sebacic acid, undecanedioic acid, dodecanedioic acid, brassylic acid, octadecanedioic acid, citric acid, and butanetetracarboxylic acid;
alicyclic polycarboxylic acids such as 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, and 1,3,5-cyclohexanetricarboxylic acid;
aromatic polycarboxylic acids such as phthalic acid, isophthalic acid, terephthalic acid, naphthalenedicarboxylic acid, 4,4'-biphenyldicarboxylic acid, trimellitic acid, and pyromellitic acid;
fatty acids such as coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, and safflower oil fatty acid; monocarboxylic acids such as lauric acid, myristic acid, palmitic acid, stearic acid, oleic acid, linoleic acid, linolenic acid, benzoic acid, p-tert-butylbenzoic acid, cyclohexanoic acid, and 10-phenyloctadecanoic acid; hydroxycarboxylic acids such as lactic acid, 3-hydroxybutanoic acid, and 3-hydroxy-4-ethoxybenzoic acid, and the like can be mentioned.

A compound obtained by substituting the carboxylic acid group of the above polycarboxylic acid with a structure represented by the above general formula (31) preferably has a molecular weight of 10,000 or less. Such a molecular weight is preferable because, as a result, molecules can move easily, and curing proceeds. The molecular weight may also be lower, such as 6,000 or less, 4,000 or less, or 2,000 or less.

Incidentally, the general structure of, as an example of such a compound, a compound in the case where the reaction described above is performed using citric acid as a polycarboxylic acid is shown below.

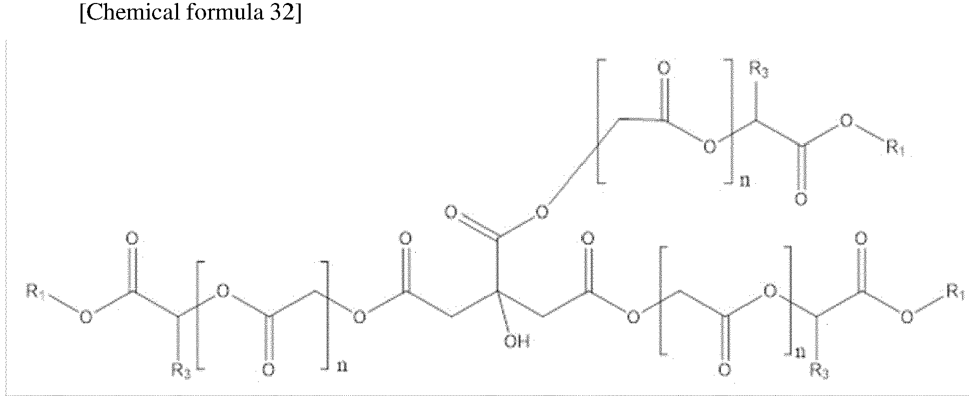

### (3-4) Compound having two or more functional groups represented by general formula (41) and/or general formula (42)

A compound having a functional group represented by general formula (41) and/or a functional group represented by general formula (42) can be obtained by the production method as described above.

Compounds having two or more such functional groups and compounds having such a functional group and a hydroxyl group can be favorably used as components of a resin composition whose curing reaction is a transesterification reaction.

A compound having a functional group represented by general formula (41) and/or a functional group represented by general formula (42) is used as a curable functional group in a curable resin composition. Therefore, it is preferable that the compound has two or more functional groups. More specifically, the compound may have two or more functional groups represented by the above general formula (41) and/or general formula (42), or may further have a hydroxyl group or the like in addition to a functional group represented by the general formula (41) described above and/or a functional group represented by the general formula (42) described above.

As described above, by subjecting various epoxy compounds to a reaction represented by general formula (51) or a reaction represented by general formula (54), a functional group represented by the above general formula (41) and/or a functional group represented by the above general formula (42) can be introduced.

Therefore, a compound obtained by subjecting a known epoxy compound to a reaction represented by the above general formula (54) can also be used in the invention.

Epoxy compounds that can be used in such a reaction are not particularly limited. For example, aliphatic polyfunctional liquid epoxy resins, bisphenol A type epoxy resins, bisphenol F type epoxy resins, biphenyl type epoxy resins, phenol novolac type epoxy resins, cresol novolac type epoxy resins, bisphenol derivative epoxy resins, naphthalene skeleton- or alicyclic skeleton-containing novolac type epoxy resins, and the like can be mentioned, and epoxy resins in which the oxirane ring is glycidyl ether and the like can be mentioned.

The epoxy compound is preferably a compound having two or more epoxy groups in one molecule.

Further, as described above, an epoxy compound can be obtained by subjecting a carboxylic acid or its derivative to a reaction represented by general formula (53).

Then, by subjecting the epoxy compound to a reaction represented by the above general formula (51) and/or general formula (54), a compound having a functional group represented by general formula (41) and/or a functional group represented by general formula (42) can be obtained.

Therefore, by subjecting various polycarboxylic acids or hydroxycarboxylic acids to the reaction described above, a compound having two or more such functional groups or a compound having such a functional group and a hydroxyl group can be obtained.

The polycarboxylic acid that can be used as a raw material for the production of a compound having a functional group represented by general formula (41) and/or a functional group represented by general formula (42) through the above reaction is not particularly limited, and, for example, those having 50 or less carbon atoms can be used.

More specifically, aliphatic polycarboxylic acids such as malonic acid, succinic acid, glutaric acid, adipic acid, pimelic acid, suberic acid, azelaic acid, sebacic acid, undecanedioic acid, dodecanedioic acid, brassylic acid, octadecanedioic acid, citric acid, and butanetetracarboxylic acid;
alicyclic polycarboxylic acids such as 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, and 1,3,5-cyclohexanetricarboxylic acid;
aromatic polycarboxylic acids such as phthalic acid, isophthalic acid, terephthalic acid, naphthalenedicarboxylic acid, 4,4'-biphenyldicarboxylic acid, trimellitic acid, and pyromellitic acid;
fatty acids such as coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, and safflower oil fatty acid; monocarboxylic acids such as lauric acid, myristic acid, palmitic acid, stearic acid, oleic acid, linoleic acid, linolenic acid, benzoic acid, p-tert-butylbenzoic acid, cyclohexanoic acid, and 10-phenyloctadecanoic acid; and the like can be mentioned.

As the hydroxycarboxylic acid having a carboxyl group and a hydroxyl group, which can be used as a raw material for the production of a compound having a functional group represented by general formula (41) and/or a functional group represented by general formula (42) through the above reaction, hydroxycarboxylic acids such as glycolic acid, citric acid, lactic acid, 3-hydroxybutanoic acid, and 3-hydroxy-4-ethoxybenzoic acid; and the like can be mentioned.

As specific examples of such compounds, for example, compounds having a structure shown below can be mentioned.

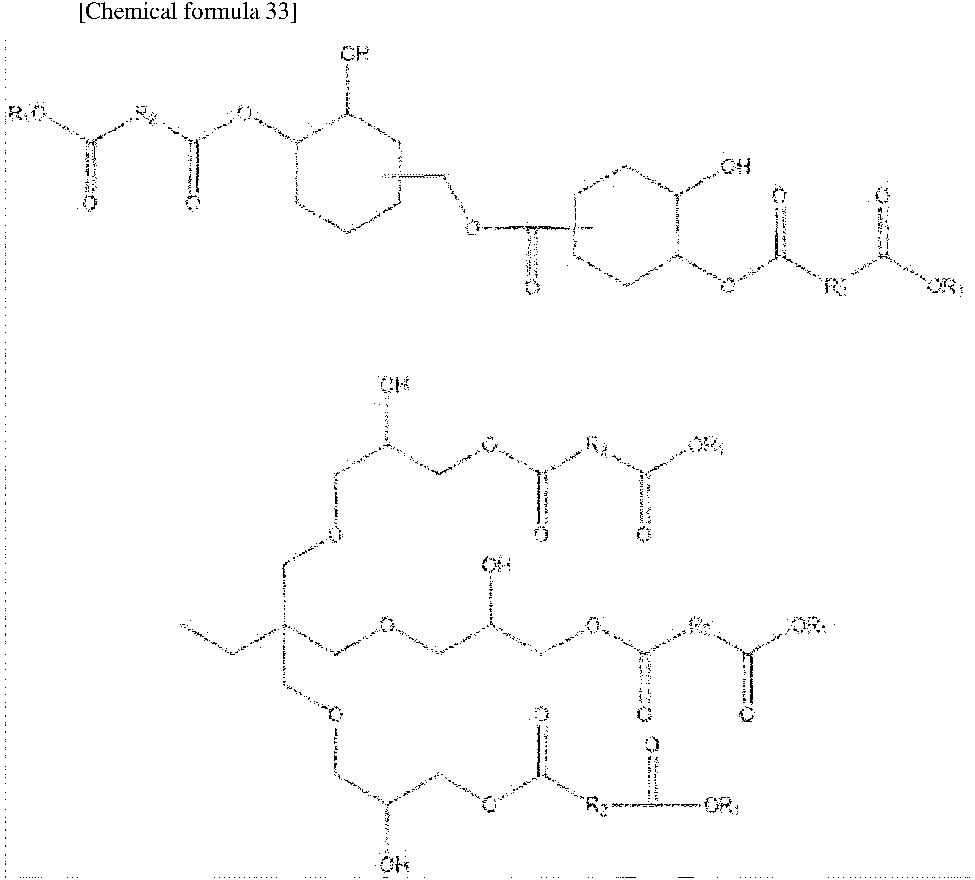

### (3-5) Cyanuric acid-based ester compound

As ester compounds having an alkyl ester group used in the invention, for example, the cyanuric acid-based ester compounds exemplified below can be mentioned.

One of them is an ester compound having an isocyanuric acid ring represented by the following general formula (71). 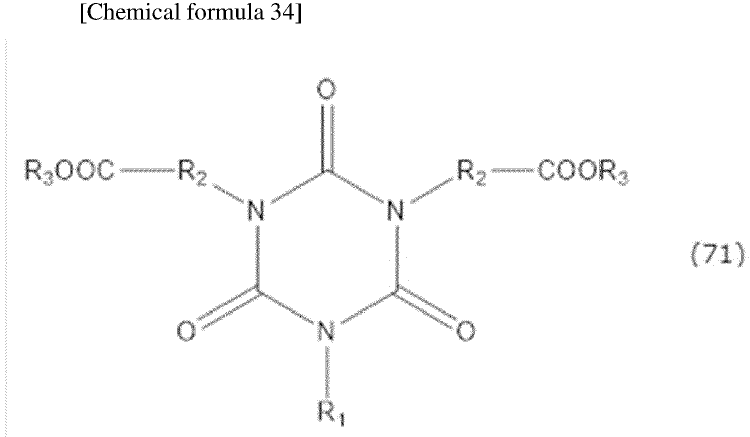
(In the formula, R₁ is hydrogen or a structure represented by R₂-COOR₃.
R₂ is a hydrocarbon group whose main chain has 50 or less atoms and which optionally has one or two more functional groups selected from the group consisting of an ester group, an ether group, an amide group, and urethane in the main chain and optionally has a side chain.
R₃ is an alkyl group having 50 or less carbon atoms)

The ester compound represented by the above general formula (71) has 2 or 3 alkyl ester groups and can be made particularly excellent in transesterification reactivity, and thus is particularly preferable for obtaining a resin composition having a cure onset temperature of 130°C or less and also having, when cured under conditions of baking at 150°C for 30 minutes, a gel fraction of 80% or more.

In a monomer represented by the above general formula (71), R₃ more preferably has a primary or secondary alkyl ester group. A primary or secondary alkyl ester group derived from such a monomer is prone to a reaction with a hydroxyl group, and, therefore, the object of the invention can be fully achieved.

The alkyl ester group is not particularly limited, and those having a known ester group, such as a methyl ester group, an ethyl ester group, a benzyl ester group, an n-propyl ester group, an isopropyl ester group, an n-butyl ester group, an isobutyl ester group, and a sec-butyl ester group, can be used. Incidentally, the alkyl group preferably has 50 or less carbon atoms. The alkyl group is preferably produced as an alcohol and volatilized during a transesterification reaction, and, therefore, the number of carbon atoms in the alkyl group is more preferably 20 or less, and still more preferably 10 or less. In addition, the boiling point of the alcohol volatilized during a curing reaction is preferably 300°C or less, and more preferably 200°C or less.

The method for producing an ester compound represented by the above general formula (71) is not particularly limited. As one example, a method in which a halogenated carboxylic acid ester is allowed to react with cyanuric acid can be mentioned. The general formula expression thereof is the following reaction. 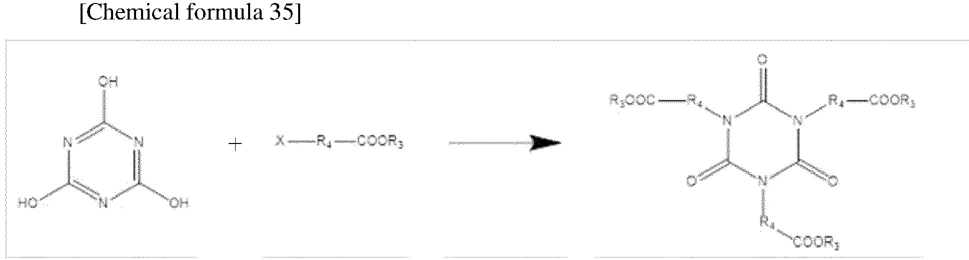
(In the formula, R₃ is an alkyl group having 50 or less carbon atoms.
R₄ is an alkylene group having 50 or less carbon atoms.
X is a halogen element)

As the halogenated carboxylic acid ester used in the reaction described above, any of known ones can be mentioned. For example, methyl chloroacetate, ethyl chloroacetate, propyl chloroacetate, isopropyl chloroacetate, methyl 2-chloropropionate, ethyl 2-chloropropionate, propyl 2-chloropropionate, isopropyl 2-chloropropionate, methyl 2-chlorobutyrate, ethyl 2-chlorobutyrate, propyl 2-chlorobutyrate, isopropyl 2-chlorobutyrate, methyl bromoacetate, ethyl bromoacetate, propyl bromoacetate, isopropyl bromoacetate, methyl 2-bromopropionate, ethyl 2-bromopropionate, propyl 2-bromopropionate, isopropyl 2-bromopropionate, methyl 2-bromobutyrate, ethyl 2-bromobutyrate, propyl 2-bromobutyrate, isopropyl 2-bromobutyrate, ethyl iodoacetate, propyl iodoacetate, isopropyl iodoacetate, methyl 2-iodopropionate, ethyl 2-iodopropionate, propyl 2-iodopropionate, isopropyl 2-iodopropionate, methyl 2-iodobutanoate, ethyl 2-iodobutanoate, propyl 2-iodobutanoate, isopropyl 2-iodobutanoate, and the like can be mentioned.

The above reaction is a well-known general reaction, and reaction conditions under which it is performed, etc., may be general conditions.

In addition, as another method for producing an ester compound represented by the above general formula (71), a method in which an orthoformic acid ester is allowed to react with a carboxylic acid having an isocyanuric acid ring can be mentioned. The general formula expression thereof is the following reaction. 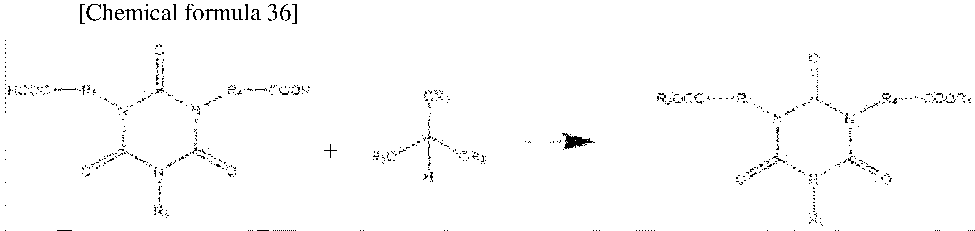
(In the formula, R₅ is hydrogen or a structure represented by R₄-COOH.
R₄ is an alkylene group having 50 or less carbon atoms.
R₆ is hydrogen or a structure represented by R₄-COOR₃.)

As a carboxylic acid having an isocyanuric acid ring used in the reaction described above, tris(2-carboxyethyl) isocyanurate, bis(2-carboxyethyl) isocyanurate, or the like can be mentioned.

In addition, as an orthoformic acid ester used in the reaction described above, methyl orthoformate, ethyl orthoformate, or the like can be mentioned.

The above reaction is a well-known general reaction, and reaction conditions under which it is performed, etc., may be general conditions.

Examples of the specific chemical structure of an ester compound having an isocyanuric acid ring represented by the general formula (71) described above are shown below. Incidentally, the invention is not limited to the compounds exemplified below.

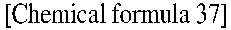

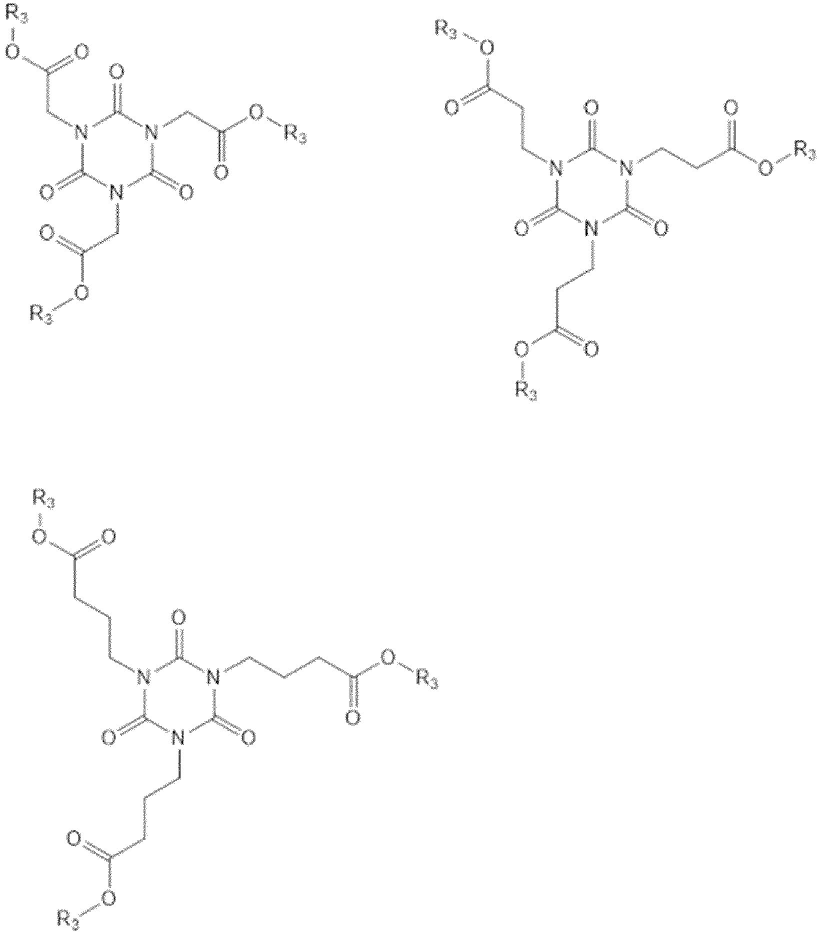

As cyanuric acid-based ester compounds used in the invention, in addition to the above ones, for example, the cyanuric acid-based ester compound exemplified below can be mentioned. 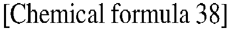 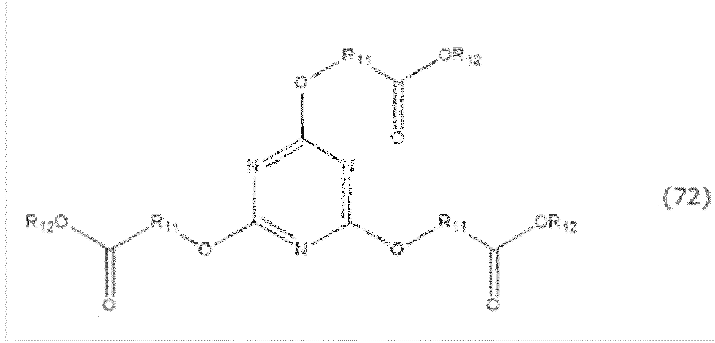
(In the formula, R₁₁ is an alkylene group having 50 or less carbon atoms.
R₁₂ is an alkyl group having 50 or less carbon atoms)

The ester compound represented by the above general formula (72) can also be made particularly excellent in transesterification reactivity, and thus is particularly preferable for obtaining a resin composition having a cure onset temperature of 130°C or less and also having, when cured under conditions of baking at 150°C for 30 minutes, a gel fraction of 80% or more.

The method for producing an ester compound represented by the above general formula (72) is not particularly limited. For example, a method in which a hydroxycarboxylic acid ester is allowed to react with cyanuric chloride can be mentioned. The general formula expression thereof is the following reaction.

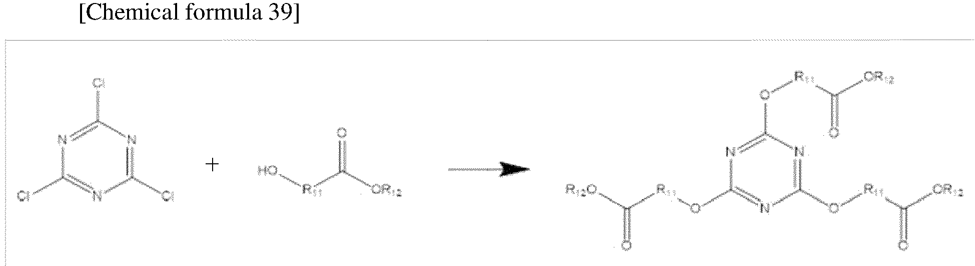

In addition, as a hydroxy acid ester used in the reaction described above, methyl glycolate, ethyl glycolate, butyl glycolate, methyl hydroxypropionate, ethyl hydroxypropionate, butyl hydroxypropionate, methyl hydroxybutyrate, ethyl hydroxybutyrate, butyl hydroxybutyrate, methyl lactate, ethyl lactate, butyl lactate, or the like can be mentioned.

When used in the invention, various cyanuric acid-based compounds are advantageous in that a coating film that exhibits excellent film physical properties with a high crosslink density can be obtained even through low-temperature curing.

When such a compound is used as the compound having an alkyl ester group, esterification is possible inexpensively by a known method, and a polyvalent ester group can be introduced with a relatively low molecular weight.

### (4) Low molecular weight polyol

In addition, as a compound having at least two hydroxyl groups in the molecule, a low molecular weight polyol (specifically, a molecular weight of 2,000 or less) may be used.

As low molecular weight polyols, for example, dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 1,1,1-trimethylolpropane, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexane dimethanol, tricyclodecane dimethanol, hydroxypivalic acid neopentyl glycol ester, hydrogenated bisphenol A, hydrogenated bisphenol F, and dimethylolpropionic acid; polylactone diols obtained by adding a lactone compound such as ε-caprolactone to the above dihydric alcohols; ester diol compounds such as bis(hydroxyethyl) terephthalate; polyether diol compounds such as alkylene oxide adducts of bisphenol A, polyethylene glycol, polypropylene glycol, and polybutylene glycol; trihydric or higher hydric alcohols such as glycerin, trimethylolethane, trimethylolpropane, diglycerin, triglycerin, 1,2,6-hexanetriol, pentaerythritol, dipentaerythritol, tris(2-hydroxyethyl)isocyanuric acid, sorbitol, and mannitol, and the like can be mentioned.

Such low molecular weight polyols are known to be commonly used, and they are inexpensively available. Further, low molecular polyols have high water solubility and can be favorably used as crosslinking agents in the case where curing in an aqueous system is intended.

The curable resin composition of the invention is characterized by being able to be cured at low temperatures, and resins particularly preferable for providing a resin composition with such performance are those shown below.

Such resins have a structure represented by general formula (12), (31), or (64), and particularly preferably have the structure of general formula (31).

In the curable composition of the invention, in addition to the resin component described above, additional crosslinking agents generally used in the fields of coating materials and adhesives may further be used. Crosslinking agents that can be used are not particularly limited, and an isocyanate compound, a blocked isocyanate compound, a melamine resin, an epoxy resin, a silane compound, and the like can be mentioned. In addition, vinyl ether, an anionically polymerizable monomer, a cationically polymerizable monomer, a radically polymerizable monomer, and the like may also be used together. A curing agent for promoting the reaction of these crosslinking agents used together may also be used together.

Incidentally, the additional crosslinking agents described above are not indispensable, and the curable resin composition of the invention can provide good curability even without containing them and is preferable in this respect.

In the case where the crosslinking agent is a polyisocyanate compound and/or a melamine resin, the amount thereof blended based on the total amount of the resin component (A) and the crosslinking agent (i.e., (crosslinking agent amount)/(crosslinking agent amount + resin component amount) is preferably 0.01 to 50 wt%. A blending amount within such a range is preferable in that a curing reaction through a transesterification reaction and a curing reaction by other curing agents are caused simultaneously.

The lower limit is more preferably 0.01 wt%, and still more preferably 1 wt%. The upper limit is more preferably 30 wt%, and still more preferably 20 wt%.

The curable resin composition of the invention can be favorably used in the fields of curable coating materials, curable adhesives, and the like, and can also be used particularly as an ambient temperature curable resin composition.

In the case of use as a thermosetting coating material, additives generally used in the coating material field may be used in addition to the components described above. For example, leveling agents, antifoaming agents, color pigments, extender pigments, bright pigments, pigment dispersants, rheology control agents, and UV absorbers, as well as any combinations thereof, may be used together.

In the case where a pigment is used, it is preferable that the total content thereof is preferably within a range of 1 to 500 wt% based on 100 wt% of the total resin component solids. The lower limit is more preferably 3 wt%, and still more preferably 5 parts by weight. The upper limit is more preferably 400 wt%, and still more preferably 300 wt%.

As the color pigments, for example, titanium oxide, zinc white, carbon black, molybdenum red, Prussian blue, cobalt blue, azo-based pigments, phthalocyanine-based pigments, quinacridone-based pigments, isoindoline-based pigments, threne-based pigments, perylene-based pigments, dioxazine-based pigments, diketopyrrolopyrrole-based pigments, and the like, as well as any combinations thereof, can be mentioned.

As the extender pigments, for example, clay, kaolin, barium sulfate, barium carbonate, calcium carbonate, talc, silica, alumina white, and the like can be mentioned. Barium sulfate and/or talc is preferable, and barium sulfate is more preferable.

As the bright pigments, for example, aluminum (including vapor-deposited aluminum), copper, zinc, brass, nickel, aluminum oxide, mica, aluminum oxide coated with titanium oxide or iron oxide, mica coated with titanium oxide or iron oxide, glass flakes, hologram pigments, and the like, as well as any combinations thereof, can be mentioned. The aluminum pigments include non-leafing aluminum and leafing aluminum.

It is preferable that the color pigments are blended into the curable resin composition in the state of being dispersed with a pigment dispersing resin. The amount of color pigment may vary depending on the kind of pigment and the like. The amount of color pigment is generally, per 100 parts by weight of resin component solids contained in the pigment dispersing resin, preferably within a range of about 0.1 to about 300 parts by weight, and more preferably about 1 to about 150 parts by weight.

The curable coating material may further contain additives for coating materials as desired, such as organic solvents, thickeners, UV absorbers, light stabilizers, antifoaming agents, plasticizers, surface conditioners, anti-settling agents, dispersants, anti-flooding agents, rheology control agents, leveling agents, substrate wetting agents, and slip agents.

As the thickeners, for example, inorganic thickeners such as silicates, metal silicates, montmorillonite, and colloidal alumina; polyacrylic acid-based thickeners such as (meth)acrylic acid-(meth)acrylic acid ester copolymers and sodium polyacrylate; associative thickeners having hydrophilic and hydrophobic moieties in one molecule and exhibiting a thickening action in an aqueous medium as a result of the adsorption of the hydrophobic moieties onto the surface of pigment or emulsion particles in the coating material, the association of the hydrophobic moieties, and the like; cellulose derivative-based thickeners such as carboxymethyl cellulose, methyl cellulose, and hydroxyethyl cellulose; protein-based thickeners such as casein, sodium caseinate, and ammonium caseinate; alginic acid-based thickeners such as sodium alginate; polyvinyl-based thickeners such as polyvinyl alcohol, polyvinyl pyrrolidone, and polyvinyl benzyl ether copolymers; polyether-based thickeners such as Pluronic^{®} polyether, polyether dialkyl esters, polyether dialkyl ethers, and polyether epoxy-modified products; maleic anhydride copolymer-based thickeners such as partial esters of vinyl methyl ether-maleic anhydride copolymers; polyamide-based thickeners such as polyamide amine salts; and the like, as well as any combinations thereof, can be mentioned.

The polyacrylic acid-based thickeners are commercially available, and, for example, "ACRYSOLASE-60", "ACRYSOLTT-615", and "ACRYSOLRM-5" (all trade names) manufactured by Rohm and Haas Company, "SN Thickener 613", "SN Thickener 618", "SN Thickener 630", "SN Thickener 634", and "SN Thickener 636" (all trade names) manufactured by San Nopco Limited, and the like can be mentioned.

In addition, the associative thickeners are commercially available, and, for example, "UH-420", "UH-450", "UH-462", "UH-472", "UH-540", "UH-752", "UH-756VF", and "UH-814N" (all trade names) manufactured by ADEKA Corporation, "ACRYSOLRM-8W", "ACRYSOLRM-825", "ACRYSOLRM-2020NPR", "ACRYSOLRM-12W", and "ACRYSOLSCT-275" (all trade names) manufactured by Rohm and Haas Company, "SN Thickener 612", "SN Thickener 621N", "SN Thickener 625N", "SN Thickener 627N", and "SN Thickener 660T" (all trade names) manufactured by San Nopco Limited, and the like can be mentioned.

As the pigment dispersing resin, it is preferable to use an acrylic-based pigment dispersing resin. More specifically, for example, an acrylic resin obtained by polymerizing a polymerizable unsaturated monomer with a polymerization initiator in the presence of a hydrophilic organic solvent can be mentioned.

Examples of the polymerizable unsaturated monomer include the compounds exemplified in the resin synthesis described above, and suitable combinations thereof can be used.

The pigment dispersing resin is preferably a resin that is soluble or dispersible in water, and specifically has a hydroxyl value of preferably 10 to 100 mgKOH/g, more preferably 20 to 70 mgKOH/g, and an acid value of preferably 10 to 80 mgKOH/g, more preferably 20 to 60 mgKOH/g.

It is preferable that the curable resin composition of the invention contains the pigment dispersing resin in an amount of, as solids, preferably 5 to 70 mass%, more preferably 7 to 61 mass%, based on the total solids mass of the resin and the pigment dispersing resin. The above range is preferable from the viewpoint of the storage stability of the curable resin composition and also the finishing properties, water resistance, intermediate polishing properties, and the like of the colored coating film formed using the colored coating composition of the invention.

The curable resin composition of the invention can also be an aqueous composition. The method for making the composition aqueous is not particularly limited, and it can be made aqueous by a general method using the components described above. Even when the composition is made aqueous, its transesterification reaction can be allowed to proceed well due to the use of the transesterification catalyst of the invention.

The objects to be coated, to which the curable resin composition can be applied, are not particularly limited, and, for example, external panel parts of bodies of passenger cars, trucks, motorcycles, buses, and like automobiles; auto parts; home appliances such as mobile phones and audio equipment, building materials, furniture, adhesives, film and glass coating agents, and like various examples can be mentioned.

The above curable resin composition can be expected to be applied to substrates which are large-sized structures and thus are difficult to heat during the formation of a coating film, such as ships, bridges, and other large-sized structures.

In addition, the composition can also be favorably used for resin coating when it is desired, for example, to add color, add luster, or give a luxurious feel to plastic products and like products to which resin curing by heating, such as baking coating, cannot be applied.

The object to be coated may be the above plastic material or an auto part formed therefrom, whose plastic surface has been subjected to a surface treatment, primer coating, or the like as desired. In addition, the object may also be a combination of the above plastic material and the above metal material.

The method for coating with the above curable resin composition is not particularly limited. For example, air spray coating, airless spray coating, rotary atomization coating, curtain coat coating, and the like can be mentioned, and air spray coating, rotary atomization coating, and the like are preferable. During coating, electrostatic charge may be applied as desired. By the above coating methods, a wet coating film can be formed from the above aqueous coating material composition.

The wet coating film can also respond to low-temperature curing at 80 to 140°C, and can be cured by heating preferably for about 10 to about 60 minutes, and more preferably for about 15 to about 40 minutes.

The thermosetting resin composition of the invention can also be used in a wet-on-wet multilayer coating film formation method. In this case, a method in which a coating material made of the thermosetting resin composition of the invention is applied, then, without curing, another coating material composition is applied thereon, and these two coating film layers are simultaneously baked to form a multilayer coating film, etc., can be mentioned. In addition, in such a coating method, it is also possible that in a multilayer coating film including three or more layers, at least one of the layers is formed from the curable resin composition of the invention.

In the case where the curable resin composition of the invention is used to form such a multilayer coating film, the coating material used in combination may be water-based or solvent-based. Further, the curing system may be a curing system through a transesterification reaction as described above, or may be other curing systems such as melamine curing, isocyanate curing, and the like.

Incidentally, in the case where the curable resin composition of the invention is used in the field of coating materials, sufficient curing performance to have smoothness, water resistance, acid resistance, and like performance is needed.

Meanwhile, in the case where the composition is used in the fields of adhesives and pressure-sensitive adhesives, curing performance as high as required for coating materials is not necessary. Although the curable resin composition of the invention can be at such a level that it can be used as a coating material, even if the composition does not reach this level, it may still be usable in the fields of adhesives, pressure-sensitive adhesives, and the like.

By three-dimensionally crosslinking the curable resin composition of the invention, a cured film is obtained.

Such a cured film has sufficient performance to be used as a coating material or an adhesive.

The cured film also encompasses a cured film formed by the method for forming a multilayer coating film described above.

### Examples

Hereinafter, the invention will be described in further detail based on the examples. Incidentally, the invention is not limited to the following examples. Incidentally, parts in the text are by weight.

### Synthesis Example 1

35 parts of n-butyl methacrylate (product of Kyoeisha Chemical Co., Ltd.: Light Ester NB), 30 parts of methoxycarbonylmethyl methacrylate, 25 parts of 4-hydroxybutyl acrylate, and 10 parts of styrene were mixed to obtain a monomer mixed solution, and 5 parts of AIBN as an initiator was dissolved in 20 parts of an aromatic hydrocarbon (T-SOL 100) to prepare an initiator solution.

80 parts of an aromatic hydrocarbon (T-SOL 100) was placed in a stirrable flask, and, while filling the flask with nitrogen, the monomer solution and the initiator solution were added dropwise. The polymerization temperature at this time was set at 100°C. The dropwise addition was performed for 2 hours, further followed by aging at 100°C for 4 hours, thereby giving a polymer solution A having a weight average molecular weight of 9,400 and a dispersity of 1.80.

### Synthesis Example 2

200 parts of n-butyl methacrylate (product of Kyoeisha Chemical Co., Ltd.: Light Ester NB), 150 parts of methoxycarbonylmethyl methacrylate, 25 parts of 4-hydroxybutyl acrylate, and 125 parts of styrene were mixed to obtain a monomer mixed solution. 15 parts of 4,4'-azobis(4-cyanovaleric acid) (Fuji Film Wako Pure Chemical Industries, Ltd., V-501) as an initiator, 60 parts of ADEKA REASOAP SR-3025 (ADEKA Corporation) and 140 parts of ion-exchanged water were added and emulsified using a homomixer at room temperature for 1 hour, and then 140 parts of ion-exchanged water was added to prepare a monomer emulsion. 440 parts of ion-exchanged water and 50 parts of the monomer emulsion were placed in a stirrable flask, and, while filling the flask with nitrogen, the remaining monomer emulsion was added dropwise to perform polymerization. The polymerization temperature at this time was set at 75°C. The dropwise addition was performed for 3 hours, further followed by aging at 75 °C for 5 hours, thereby giving an emulsion A.

### Synthesis Example 3

Using 40 parts of n-butyl methacrylate (product of Kyoeisha Chemical Co., Ltd.: Light Ester NB), 50 parts of 4-hydroxybutyl acrylate, and 10 parts of styrene were mixed to obtain a monomer mixed solution, and 5 parts of 1,1,3,3-tetramethylbutyl peroxy-2-ethylhexanoate (NOF Corporation, PEROCTA O) as an initiator was dissolved in butyl acetate to prepare an initiator solution. 100 parts of butyl acetate was placed in a stirrable flask, and, while filling the flask with nitrogen, the monomer solution and the initiator solution were added dropwise. The polymerization temperature at this time was set at 100°C. The dropwise addition was performed for 2 hours, further followed by aging at 100°C for 4 hours, thereby giving a polymer solution B having a weight average molecular weight of 11,000 and a dispersity of 2.2.

### Synthesis Example 4

Using 30 parts of n-butyl methacrylate (product of Kyoeisha Chemical Co., Ltd.: Light Ester NB), 30 parts of methoxycarbonylmethyl methacrylate, 25 parts of 4-hydroxybutyl acrylate, 10 parts of styrene, and 5 parts of methacrylic acid were mixed to obtain a monomer mixed solution, and 2.5 parts of AIBN as an initiator was dissolved in 20 parts of butyl glycol to prepare an initiator solution.

80 parts of butyl glycol was placed in a stirrable flask, and, while filling the flask with nitrogen, the monomer solution and the initiator solution were added dropwise. The polymerization temperature at this time was set at 100°C. The dropwise addition was performed for 2 hours, further followed by aging at 100°C for 4 hours, thereby giving a polymer solution C.

### Synthesis Example 5

40 parts of trimethylolpropane triacrylate, 55 parts of dimethyl malonate, 56 parts of potassium carbonate, 1.5 parts of 18-crown-6 ether, and 95 parts of tetrahydrofuran were mixed and stirred at 50°C for 3 hours. After the completion of the reaction, cyclohexane and water were fed to perform washing with water. The organic layer was neutralized with a saturated ammonium chloride aqueous solution and washed twice with water, and the resulting organic layer was concentrated under reduced pressure, thereby giving an ester compound A.

### Synthesis Example 6

25 parts of tris(2-carboxyethyl) isocyanurate, 100 parts of methanol, 100 parts of trimethyl orthoformate, and 0.8 parts of para-toluenesulfonic acid were fed to a stirrable flask and allowed to react at 80°C for 5 hours. After the completion of the reaction, 200 parts of toluene and 100 parts of water were fed to perform washing with water, and then the organic layer was washed once with 100 parts of a 3% sodium bicarbonate solution and twice with 100 parts of water. The resulting organic layer was concentrated under reduced pressure, thereby giving an ester compound B.

Incidentally, in the Examples, the weight average molecular weight and dispersity are values of the area ratio and polystyrene-equivalent molecular weight measured by gel permeation chromatography (GPC). The column used was GPC KF-804L, and the solvent used was tetrahydrofuran.

### Synthesis Example 7

49 parts of 2-methylimidazole and 51 parts of methyl acrylate were mixed and stirred at 60°C for 2 hours, thereby giving an imidazole compound A through the following reaction.

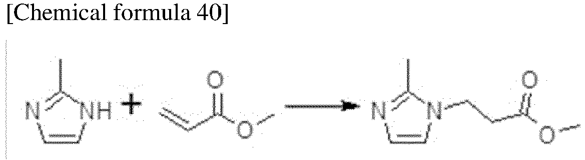

### Synthesis Example 8

42 parts of 2-methylimidazole and 58 parts of 2-hydroxyethyl acrylate were mixed and stirred at 60°C for 2 hours, thereby giving an imidazole compound B through the following reaction.

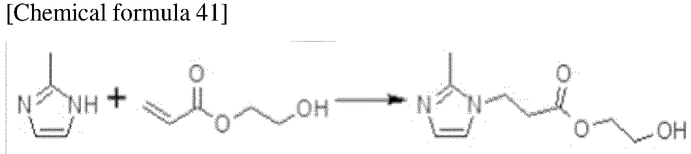

### Examples 1 to 12, Comparative Examples 1 to 4

The components shown in Table 1 were mixed, applied to form a 400-µm (WET) coating film on a PET film using an applicator, and dried for 30 minutes at the temperature shown in the table. Subsequently, after allowing to stand at 22°C for 72 hours, gel fraction measurement, pencil hardness, and a rigid-body pendulum test using a conditioning solution were performed.

Incidentally, in Table 1, DABCO^{®} is triethylenediamine.

Each evaluation was performed as follows. The results are shown in Tables 1 and 2.

For gel fraction, a film obtained in each example was dissolved in refluxing acetone for 30 minutes using Soxhlet, and the remaining weight% of the film was measured as the gel fraction.

A gel fraction of 0 to 40% was rated not to withstand practical use, and "poor" was given.

A gel fraction of 40 to 60% was rated to show a certain degree of curing, and "fair" was given.

A gel fraction of 60 to 80% was rated to withstand practical use, and "good" was given.

A gel fraction of 80 to 100% was rated to have excellent performance, and "excellent" was given.

Pencil hardness was measured from a cured coating film in accordance with JIS K5600-5-4 with a load of 750 g. Hardness that resulted in a rating of "no scratch" four or more times out of five tests is shown.

A rigid-body pendulum test was performed using a rigid-body pendulum tester manufactured by A&D Company Limited (Model No.: RPT-3000W) at a temperature rise temperature of 3°C/min.
Pendulum: FRB-100
Film thickness (WET): 100 µm

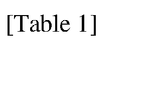

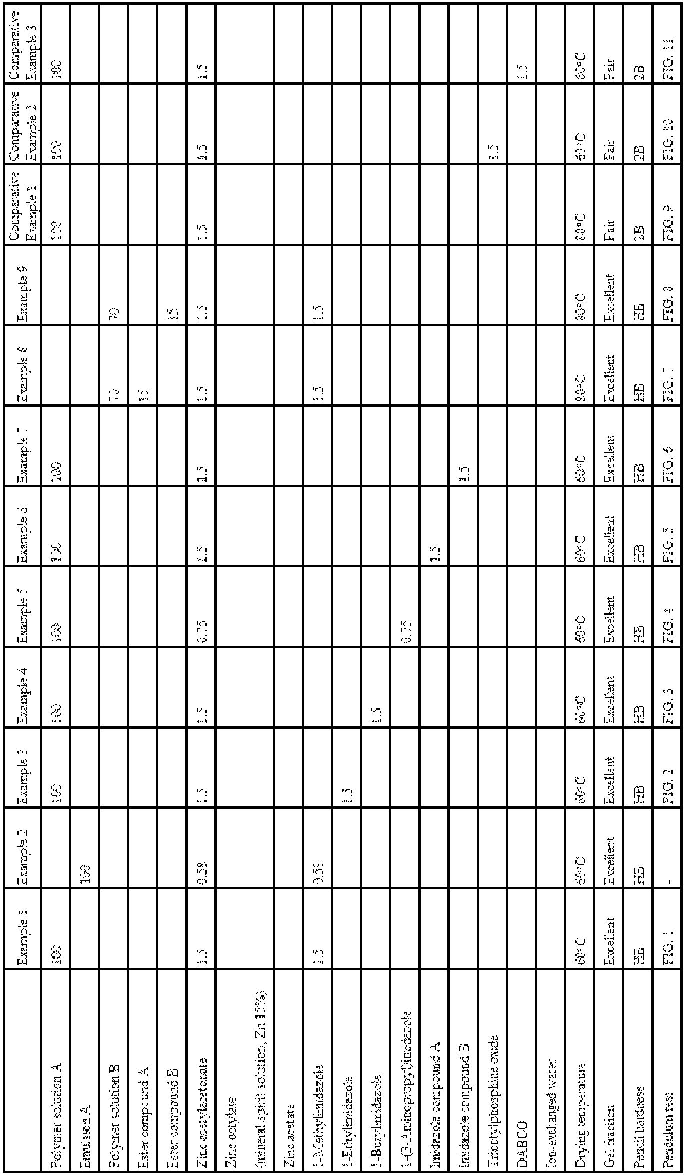

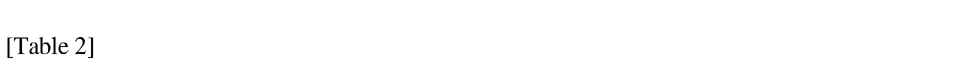

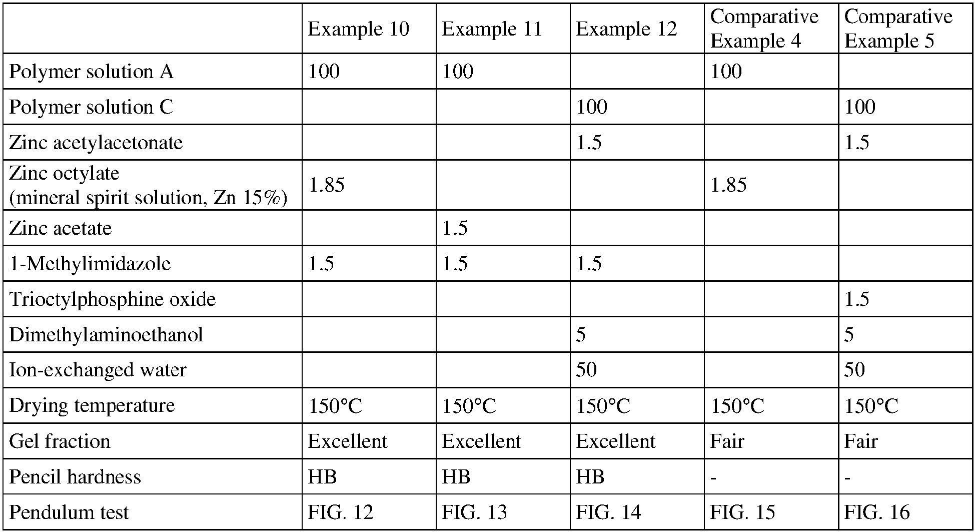

The results in Table 1 show that as a result of using the transesterification catalyst (B) according to the invention, a curable resin composition that exhibits a low-temperature curing reaction can be obtained.

### (Industrial Applicability)

The curable resin composition of the invention is a curable resin composition that can be favorably used in the fields that need curing at low temperatures.

## Claims

1. A curable resin composition comprising:
a resin component (A) having -COOR (R is an alkyl group having 50 or less carbon atoms) and a hydroxyl group; and
a transesterification catalyst (B), wherein
the transesterification catalyst (B) contains a zinc-containing compound and an imidazole compound.

2. The curable resin composition according to claim 1, wherein the zinc compound is at least one zinc compound selected from the group consisting of zinc acetate, zinc octylate, zinc naphthenate, zinc gluconate, zinc acrylate, zinc acetylacetonate, zinc trifluoromethanesulfonate, and zinc oxide.

3. The curable resin composition according to claim 1 or 2, wherein the imidazole compound is represented by the following general formula: 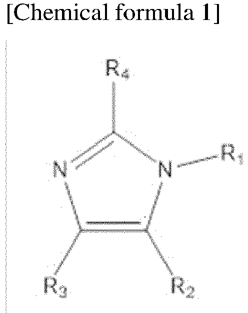 (wherein R₁ is an alkyl group, alkenyl group, or aromatic substituent having 10 or less carbon atoms and optionally having a branched structure or a ring structure, and optionally has at least one member selected from the group consisting of a hydroxyl group, an amino group, a carbonyl group, a cyano group, an ester group, an amide group, an ether group, and a nitro group, and R₂ to R₄ are each independently a hydrogen atom or an alkyl group, alkenyl group, or aromatic substituent having 10 or less carbon atoms, and each optionally have at least one member selected from the group consisting of a hydroxyl group, an amino group, a carbonyl group, a cyano group, an ester group, an amide group, an ether group, and a nitro group.)
